(19) 

(11) **EP 4 668 614 B1**

(12) **EUROPÄISCHE PATENTSCHRIFT**

(45) Veröffentlichungstag und Bekanntmachung des Hinweises auf die Patenterteilung:
**12.08.2026 Patentblatt 2026/33**

(21) Anmeldenummer: **24182981.1**

(22) Anmeldetag: **19.06.2024**

(51) Internationale Patentklassifikation (IPC):
***H04B 10/112*** *(2013.01)* ***H04B 10/118*** *(2013.01)*
***H04B 7/185*** *(2006.01)*

(52) Gemeinsame Patentklassifikation (CPC):
**H04B 7/18504; H04B 10/1123; H04B 10/118**

(54) **VORRICHTUNGEN, VERFAHREN, UND COMPUTERPROGRAMME FÜR EINE BODENSTATION UND EINE HÖHENPLATTFORM ZUR SICHERUNG EINER KOMMUNIKATIONSVERBINDUNG, HÖHENPLATTFORM, FLUGGERÄT, SATELLIT, UND BODENSTATION**

APPARATUSES, METHODS, AND COMPUTER PROGRAMS FOR A GROUND STATION AND A HIGH ALTITUDE PLATFORM FOR SECURING A COMMUNICATION LINK, HIGH ALTITUDE PLATFORM, AIRCRAFT, SATELLITE, AND GROUND STATION

APPAREILS, PROCÉDÉS ET PROGRAMMES INFORMATIQUES POUR UNE STATION AU SOL ET UNE PLATEFORME D'ÉLÉVATION POUR SÉCURISER UNE LIAISON DE COMMUNICATION, PLATEFORME D'ÉLÉVATION, AÉRONEF, SATELLITE ET STATION AU SOL

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(43) Veröffentlichungstag der Anmeldung:
**24.12.2025 Patentblatt 2025/52**

(73) Patentinhaber:
- **Deutsche Telekom AG**
  **53113 Bonn (DE)**
- **Technische Universität München**
  **80333 München (DE)**

(72) Erfinder:
- **GEITZ, Marc**
  **58089 Hagen (DE)**
- **MÖNICH, Ullrich**
  **81369 München (DE)**
- **BOCHE, Holger**
  **10318 Berlin (DE)**

(74) Vertreter: **2SPL Patentanwälte PartG mbB**
**Landaubogen 3a**
**81373 München (DE)**

(56) Entgegenhaltungen:
**CN-B- 110 611 545**

- **ARSLAN HÜSEYIN ET AL: "Physical Layer Security for Wireless Sensing and Communication", IET SECURITY SERIES, 1 January 2022 (2022-01-01), pages 1 - 359, XP093179568, Retrieved from the Internet <URL:https://digital-library.theiet.org/content/books/sc/pbse018e;jsessionid=30pawjjuj5igh.x-iet-live-01>**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 4 668 614 B1

## Beschreibung

### Technisches Gebiet

Die vorliegende Offenbarung betrifft Vorrichtungen, Verfahren, und Computerprogramme für eine Bodenstation und eine Höhenplattform zur Sicherung einer Kommunikationsverbindung, eine oder mehrere Höhenplattformen, ein Fluggerät und eine Bodenstation, insbesondere aber nicht ausschließlich, ein Konzept zum quantensicheren Schutz einer Kommunikationsverbindung einer Höhenplattform durch gezieltes Einfügen von Rauschanteilen auf der physikalischen Kommunikationsschicht im Zusammenspiel mit Laser- und fokussierten Funkverbindungen.

### Hintergrund

Aus der konventionellen Technik sind verschiedene Konzepte bekannt, die sich Höhenplattformen (auch engl. High-Altitude Platform, HAP) zu Nutze machen. Es ist abzusehen, dass HAPs in zukünftigen Netzwerken eine bedeutende Rolle spielen werden. HAPs sind stationäre Plattformen, die in gro-βer Höhe über Ballungsräumen stationiert werden, um als Netzwerkknoten Kommunikationsdienste zu erbringen. Typischerweise befinden sich HAPs oberhalb der Flughöhe von Verkehrsflugzeugen von ca. 13 km und unterhalb der Flughöhe von Low Earth Orbit Satelliten (LEO) von ca. 400km. Dabei versuchen die HAPs stationär an einem Ort zu bleiben. HAPs lassen sich über Wetterballons oder Zeppeline realisieren und es existieren schon kommerzielle Dienste und Angebote. Die Plattformen, die erwartungsgemäß über den Großstädten und Ballungsräumen Deutschlands, Europas und weltweit eingesetzt werden, werden dabei untereinander sowie mit Satelliten kommunizieren und ihre Signale zu den terrestrischen Netzwerkelementen, aber auch direkt zu den Nutzern der Kommunikationsdienste und Bodenstationen abstrahlen. Die verbundenen Elemente sind sowohl klassische Netzwerkgeräte (Antennen, Switche, Router, ...), als auch Endgeräte (Sensoren, mobile Endgeräte, stationäre Endgeräte), ICT-Geräte (Information and Communication Technology für Compute (Rechenleistung), Netzwerk, Storage (Speicher)) oder quanten-klassische Geräte (quantenoptische Netzwerkgeräte, Quantenspeicher oder Quantencomputer). In den zu erwartenden Netzwerkarchitekturen werden HAPs über verschiedene Zugriffstechnologien untereinander und auch mit anderen Netzwerkknoten wie beispielsweise Bodenstationen kommunizieren.

Es besteht daher ein Bedarf Kommunikationsverbindungen von HAPs abzusichern.

Das Dokument Arslan Hüseyin ET AL: "Physical Layer Security for Wireless Sensing and Communication", IET Security Series, 1. Januar 2022 (2022-01-01), Seiten 1-359, behandelt ausführlich physikalische Schicht-Sicherheitsmechanismen (PLS) für drahtlose Kommunikation und Sensorik, welche die Authentizität, Vertraulichkeit, Integrität und Verfügbarkeit sichern sollen. Aufgrund zunehmender Komplexität und Heterogenität zukünftiger drahtloser Netzwerke (5G, 6G, IoT) reichen kryptographische Verfahren allein nicht aus. PLS nutzt stattdessen physikalische Eigenschaften der drahtlosen Kanäle, des Funk-Frontends sowie der Umgebung, um Angriffe wie Abhören, Jamming und Spoofing zu verhindern. Das Dokument beschreibt umfassend technische Konzepte wie kanalbasierte Schlüsselgenerierung, Beamforming, kooperative Kommunikation und RF-Fingerprinting, und betont die Rolle von künstlicher Intelligenz für adaptive Sicherheitslösungen.

### Zusammenfassung

Ausführungsbeispiele basieren auf der Erkenntnis, dass die verschiedenen Kommunikationsverbindungen einer HAP über das Einfügen von Rauschanteilen abgesichert werden können. Ein Gedanke dabei ist es, dass es durch zusätzlich eingefügtes Rauschen einem Abhörer unmöglich gemacht wird, die Verbindung abzuhören, bzw. die Nutzdaten aus einem Empfangssignal zu dekodieren. Durch die gerichteten Verbindungen einer HAP wird ein Abhörer eine schlechtere Signalqualität als der legitime Empfänger haben und durch die zusätzlichen Rauschanteile das Nutzsignal aus dem empfangenen verrauschten Signal nicht dekodieren können.

Ausführungsbeispiele schaffen eine Vorrichtung für einen Sendeempfänger einer Höhenplattform, High-Altitude Platform HAP, und zur Sicherung von Kommunikationsverbindungen zwischen dem Sendeempfänger und weiteren Sendeempfängern in einem Kommunikationssystem. Die Vorrichtung umfasst eine Laserkommunikationseinrichtung zur Kommunikation über eine Laserverbindung mit einem ersten weiteren Sendeempfänger und ein Laser-Sicherheitsmodul, das ausgebildet ist, um die Laserverbindung durch Verwenden von zusätzlich eingefügten ersten Rauschanteilen auf einer physikalischen Schicht der Laserverbindung zu sichern. Die Vorrichtung umfasst darüber hinaus eine Funkkommunikationseinrichtung zur Kommunikation über eine Funkverbindung mit einem zweiten weiteren Sendeempfänger und ein Funk-Sicherheitsmodul, das ausgebildet ist, um die Funkverbindung durch Verwenden von zusätzlich eingefügten zweiten Rauschanteilen auf einer physikalischen Schicht der Funkverbindung zu sichern. Das Verwenden der zusätzlich eingefügten Rauschanteile kann für eine Abhörsicherheit sorgen, die ggf. auch quantensicher ist, da auch ein Quantencomputer ein entsprechend verrauschtes und damit informationsloses Signal nicht dekodieren kann.

Die Laserkommunikationseinrichtung kann dabei eine Sendeapertur zur Abstrahlung eines Lasersignals auf-

weisen, die mindestens dem 10^5-fachen der Wellenlänge des abgestrahlten Laserlichtes entspricht. Durch diese Dimensionierung wird ein Anhören zusätzlich erschwert, da eine große Sendeapertur eine große Abhörantenne bedingt. Die Laserkommunikationseinrichtung kann auch eine Empfangsapertur zum Empfang eines Lasersignals aufweisen, die mindestens dem 10^5-fachen der Wellenlänge des empfangenen Laserlichtes entspricht. So kann die Abhörsicherheit für beide Kommunikationseinrichtungen erhöht werden.

In weiteren Ausführungsbeispielen kann die die Laserkommunikationseinrichtung ausgebildet sein, um Information über eine Übertragungsqualität mit dem ersten weiteren Sendeempfänger zu kommunizieren und ferner dazu ausgebildet sein, um Übertragungsparameter und/oder eine Vorschrift für das Einfügen der Rauschanteile für die Laserverbindung einzustellen. Dies kann beispielsweise basierend auf der Übertragungsqualität und basierend auf einem zur Absicherung der Funkverbindung notwendigen Signalqualitätsunterschied für einen Abhörer relativ zu einer Signalqualität beim legitimen Empfänger erfolgen. Ergänzend oder alternativ kann das Einstellen auch basierend auf der Übertragungsqualität und basierend auf einem geschätzten Signalqualitätsunterschied für einen Abhörer relativ zu einer Signalqualität beim legitimen Empfänger erfolgen, um die Nachricht vor einem Abhören zu sichern. Insofern können zumindest manche Ausführungsbeispiele einen Regelmechanismus bereitstellen, der die Übertragungsqualität und auch den Schutz vor Abhörern sichert.

Auch die Funkkommunikationseinrichtung kann in Ausführungsbeispielen ausgebildet sein, um einen Antennenstrahl mit einer oder mehreren Antennen zu formen, dessen Halbwertsbreite kleiner als 1% eines Abstands zu den ein oder mehreren Antennen ist. Durch die damit erreichte Fokussierung kann die Abhörsicherheit erhöht werden, da ein potenzieller Abhörer mit zunehmender Fokussierung der Sichtverbindung zwischen Sender und Empfänger immer näherkommen muss, um eine Signalqualität zu erlangen, die ein Abhören bzw. ein Dekodieren von Nachrichtenteilen ermöglicht. So kann der Antennenstrahl auf dem Boden beispielsweise eine Halbwertsbreite von weniger als 50m aufweisen. Z.B. kann die Funkkommunikationseinrichtung ein Antennenfeld mit mehr als 1000 Antennenelementen aufweisen.

In einigen Ausführungsbeispielen kann die Funkkommunikationseinrichtung darüber hinaus ausgebildet sein, um Information über eine Übertragungsqualität mit dem zweiten weiteren Sendeempfänger zu kommunizieren und ferner ausgebildet sein, um Übertragungsparameter und/oder eine Vorschrift für das Einfügen der Rauschanteile für die Funkverbindung einzustellen. Dies kann basierend auf der Übertragungsqualität und basierend auf einem zur Absicherung der Funkverbindung notwendigen Signalqualitätsunterschied für einen Abhörer relativ zu einer Signalqualität beim legitimen Empfänger erfolgen. Zusätzlich oder alternativ kann dies basierend auf der Übertragungsqualität und basierend auf einem geschätzten Signalqualitätsunterschied für einen Abhörer relativ zu einer Signalqualität beim legitimen Empfänger erfolgen, um die Nachricht vor einem Abhören zu sichern. So kann zumindest in einigen Ausführungsbeispielen auch die Funkverbindung mit einer Regelung zur Sicherung der Übertragungsqualität einerseits und zur Einstellung des Abhörschutzes andererseits gesichert sein.

Die zusätzlich eingefügten ersten und/oder zweiten Rauschanteile können auf einem oder mehreren Zufallswerten basieren, die der HAP und dem ersten und/oder dem zweiten weiteren Sendempfänger bekannt sind. Eine Kommunikation der Zufallswerte kann über entsprechende Mechanismen dabei geheim oder auch öffentlich erfolgen. In Ausführungsbeispielen kann der erste weitere Sendeempfänger z.B. ein Satellit, eine andere HAP oder eine stationäre Bodenstation sein. Der zweite weitere Sendeempfänger kann beispielsweise ein Mobilfunkendgerät oder ein gesteuertes Vehikel sein. Insofern wird eine abgesicherte Kommunikation der HAP auch in Relaisszenarien ermöglicht.

Die Vorrichtung kann in weiteren Ausführungsbeispielen ein oder mehrere Signalverarbeitungskomponenten umfassen, die ausgebildet sind, um eine über die Funkkommunikationseinrichtung empfangene Nachricht von dem zweiten weiteren Sendeempfänger über die Laserkommunikationseinrichtung an den ersten weiteren Sendeempfänger weiterzuleiten, und/oder um eine über die Laserkommunikationseinrichtung empfangene Nachricht von dem ersten weiteren Sendeempfänger über die Funkkommunikationseinrichtung an den zweiten weiteren Sendeempfänger weiterzuleiten. Insofern kann die Vorrichtung in einer HAP eine Relaisstation zwischen der Laserverbindung und der Funkverbindung sein.

Die ein oder mehreren Signalverarbeitungskomponenten können ausgebildet sein, um in der Nachricht über das Laser-Sicherheitsmodul und das Funk-Sicherheitsmodul vor dem Weiterleiten vorherige zusätzliche Rauschanteile zu entfernen und neue zusätzliche Rauschanteile einzufügen. Dadurch können die Einzelverbindungen einer Relaisstrecke separat und individuell abgesichert werden. Die ein oder mehreren Signalverarbeitungskomponenten können auch ausgebildet sein, um die Nachricht weiterzuleiten, ohne die zusätzlichen Rauschanteile in der Nachricht zu verändern. Das kann niedrige Latenz und Signalverarbeitungszeiten begünstigen.

Die ein oder mehreren Signalverarbeitungskomponenten können auch ausgebildet sein, um weitere Zufallszahlen zu generieren und um auf Basis der weiteren Zufallszahlen kryptografische Schlüssel zu bestimmen, wobei die ein oder mehreren Signalverarbeitungskomponenten dann ferner ausgebildet sind, um die kryptographischen Schlüssel über das Laser-Sicherheitsmodul und/oder das Funk-Sicherheitsmodul für die Übertragung auf der physikalischen Schicht zu sichern und an ein oder mehrere weitere Sendeempfänger zu übertragen. Ausführungsbeispiele können so auch ein Verfahren zur abgesicherten Verteilung kryptografischer Schlüssel bereitstellen. Darüber hinaus können das Laser-

Sicherheitsmodul und/oder das Funk-Sicherheitsmodul ferner ausgebildet sein, um die Kommunikation zusätzlich über einen post-quantum-kryptografischen Verschlüsselungsalgorithmus zu verschlüsseln. Ausführungsbeispiele können so ein besonders sicheres Übertragungskonzept bereitstellen.

Eine Höhenplattform, HAP, mit einer Vorrichtung gemäß der vorliegenden Beschreibung und ein Fluggerät, insbesondere ein Satellit, ein Zeppelin oder ein atmosphärischer/stratosphärischer Gleiter, mit einer Höhenplattform, HAP, gemäß der vorliegenden Beschreibung sind weitere Ausführungsbeispiele.

Ausführungsbeispiele schaffen auch eine Vorrichtung für einen Sendeempfänger einer Bodenstation und zur Sicherung einer Kommunikationsverbindung zwischen dem Sendeempfänger und einer Höhenplattform, HAP, in einem Kommunikationssystem. Die Vorrichtung umfasst eine Laserkommunikationseinrichtung zur Kommunikation über eine Laserverbindung mit der HAP und ein Laser Sicherheitsmodul, das ausgebildet ist, um die Laserverbindung durch Verwenden von zusätzlich eingefügten Rauschanteilen auf einer physikalischen Schicht der Laserverbindung, zu sichern. Die Laserkommunikationseinrichtung weist dabei eine Sendeapertur zur Abstrahlung eines Lasersignals auf, die mindestens dem 5* 10^5-fachen der Wellenlänge des abgestrahlten Laserlichtes entspricht. Dadurch kann auch auf der Seite einer Bodenstation die Laserkommunikation abgesichert werden.

Die Laserkommunikationseinrichtung kann dabei ferner eine Empfangsapertur zum Empfang eines Lasersignals aufweisen, die mindestens dem 5*10^5-fachen der Wellenlänge des abgestrahlten Laserlichtes entspricht und/oder die Empfangsapertur entspricht mindestens einer Halbwertsbreite eines Antennenstrahls der Höhenplattform auf dem Boden. Wie bereits oben erwähnt bedingt eine große Apertur, dass ein etwaiger Abhörer eine entsprechend groß dimensionierte Abhörantenne in den Strahlgang bringen müsste. Eine große Apertur erschwert daher das Abhören. Das Laser-Sicherheitsmodul kann auch hier ferner ausgebildet sein, um die Kommunikation zusätzlich über einen post-quantum-kryptografischen Verschlüsselungsalgorithmus zu verschlüsseln. Ein weiteres Ausführungsbeispiel ist eine Bodenstation für ein Kommunikationssystem mit einer Vorrichtung für einen Sendeempfänger für eine Bodenstation wie hierin beschrieben.

Ausführungsbeispiele schaffen darüber hinaus ein Verfahren für einen Sendeempfänger einer Höhenplattform, HAP, und zur Sicherung von Kommunikationsverbindungen zwischen dem Sendeempfänger und weiteren Sendeempfängern in einem Kommunikationssystem. Das Verfahren umfasst ein Kommunizieren über eine Laserverbindung mit einem ersten weiteren Sendeempfänger und ein Sichern der Laserverbindung durch Verwenden von zusätzlich eingefügten ersten Rauschanteilen auf einer physikalischen Schicht der Laserverbindung. Das Verfahren umfasst darüber hinaus ein Kommunizieren über eine Funkverbindung mit einem zweiten weiteren Sendeempfänger und ein Sichern der Funkverbindung durch Verwenden von zusätzlich oder künstlich eingefügten zweiten Rauschanteilen auf einer physikalischen Schicht der Funkverbindung.

Ein weiteres Ausführungsbeispiel ist ein Verfahren für einen Sendeempfänger einer Bodenstation und zur Sicherung einer Kommunikationsverbindung zwischen dem Sendeempfänger und einer Höhenplattform, HAP, in einem Kommunikationssystem. Das Verfahren umfasst ein Kommunizieren über eine Laserverbindung mit der HAP und ein Sichern der Laserverbindung durch Verwenden von künstlich eingefügten Rauschanteilen auf einer physikalischen Schicht der Laserverbindung. Das Verfahren umfasst ferner ein Abstrahlen eines Lasersignals zur Kommunikation mit der HAP über eine Sendeapertur, wobei die Sendeapertur mindestens dem 5* 10^5-fachen der Wellenlänge des abgestrahlten Laserlichtes entspricht.

Ausführungsbeispiele schaffen auch ein System zur Realisierung einer quantensicheren Niedriglatenzverbindung zwischen zwei Bodenstationen gemäß der vorliegenden Beschreibung und mit einer oder mehreren Höhenplattformen gemäß der vorliegenden Beschreibung als Relaisstrecke zwischen den zwei Bodenstationen.

Ein weiteres Ausführungsbeispiel ist ein Computerprogramm mit einem Programmcode zur Durchführung eines der hierin beschriebenen Verfahren, wenn der Programmcode auf einem Computer, einem Prozessor oder einer programmierbaren Hardwarekomponente ausgeführt wird.

## Figurenkurzbeschreibung

Einige Beispiele von Vorrichtungen und/oder Verfahren werden nachfolgend bezugnehmend auf die beiliegenden Figuren lediglich beispielhaft näher erläutert. Es zeigen:

Fig. 1 zeigt ein Blockdiagramm eines Ausführungsbeispiels einer Vorrichtung für einen Sendeempfänger einer Höhenplattform, High-Altitude Platform HAP, und zur Sicherung von Kommunikationsverbindungen zwischen dem Sendeempfänger und weiteren Sendeempfängern in einem Kommunikationssystem und ein Blockdiagramm eines Ausführungsbeispiels einer Vorrichtung für einen Sendeempfänger einer Bodenstation und zur Sicherung einer Kommunikationsverbindung zwischen dem Sendeempfänger und einer Höhenplattform, HAP, in einem Kommunikationssystem;

Fig. 2 ein Ablaufdiagramm eines Ausführungsbeispiels eines Verfahrens für einen Sendeempfänger einer Höhen-

plattform, HAP, und zur Sicherung von Kommunikationsverbindungen zwischen dem Sendeempfänger und weiteren Sendeempfängern in einem Kommunikationssystem;

Fig. 3 ein Ablaufdiagramm eines Verfahrens für einen Sendeempfänger einer Bodenstation und zur Sicherung einer Kommunikationsverbindung zwischen dem Sendeempfänger und einer Höhenplattform, HAP, in einem Kommunikationssystem;

Fig. 4 eine Übersicht über eine mehrschichtige Architektur nicht-terrestrischer Netzwerke;

Fig. 5 ein Blockdiagramm einer Absicherung auf der physikalischen Schicht in einem Ausführungsbeispiel;

Fig. 6 eine Strahlkaustik im Grundmode eines elektromagnetischen Feldes eines Laserstrahls;

Fig. 7 Beamforming/Strahlformung in 5G/6G Mobilfunknetzwerken mit Hilfe von Antennenarrays;

Fig. 8 eine Illustration zur Berechnung der transversalen Dimension eines Antennenstrahls;

Fig. 9 eine Illustration zum Abstrahlverhalten linearer Antennenarrays mit N=16, 32 oder 64 Antennen;

Fig. 10 eine Darstellung eines Temperaturverlaufs in der Atmosphäre;

Fig. 11 ein Szenario eines Abhörversuchs mit einem Spionagesatelliten;

Fig. 12 eine normierte Beam-Intensität auf der Erdoberfläche bei 15km HAP-Höhe;

Fig. 13 Beamforming/Strahlformung (zentrales Maximum) eines 32x32 Antennen Senders (eindimensionaler Schnitt);

Fig. 14 eine Illustration zur minimalen Annäherung eines Angreifers mit 64 Antennen an einen HAP-Sender mit 1024 Antennen;

Fig. 15 ein Ausführungsbeispiel mit einem Zeppelin als HAP;

Fig. 16 ein Ausführungsbeispiel mit einem stratosphärischen Gleiter als HAP;

Fig. 17 ein Ausführungsbeispiel eines non-terrestrischen Netzwerks;

Fig. 18 ein Ausführungsbeispiel zweier HAP über Frankfurt und London; und

Fig. 19 ein Ausführungsbeispiel einer HAP, die mehrere Antennenstrahlen nutzt.

**Beschreibung**

Einige Beispiele werden nun ausführlicher Bezug nehmend auf die beiliegenden Figuren beschrieben. Weitere mögliche Beispiele sind jedoch nicht auf die Merkmale dieser detailliert beschriebenen Ausführungsformen beschränkt. Diese können Modifikationen der Merkmale sowie Entsprechungen und Alternativen zu den Merkmalen aufweisen. Ferner soll die Terminologie, die hierin zum Beschreiben bestimmter Beispiele verwendet wird, nicht einschränkend für weitere mögliche Beispiele sein.

Gleiche oder ähnliche Bezugszeichen beziehen sich in der gesamten Beschreibung der Figuren auf gleiche oder ähnliche Elemente beziehungsweise Merkmale, die jeweils identisch oder auch in abgewandelter Form implementiert sein können, während sie die gleiche oder eine ähnliche Funktion bereitstellen. In den Figuren können ferner die Stärken von Linien, Schichten und/oder Bereichen zur Verdeutlichung übertrieben sein.

Wenn zwei Elemente A und B unter Verwendung eines "oder" kombiniert werden, ist dies so zu verstehen, dass alle möglichen Kombinationen offenbart sind, d. h. nur A, nur B sowie A und B, sofern nicht im Einzelfall ausdrücklich anders definiert. Als alternative Formulierung für die gleichen Kombinationen kann "zumindest eines von A und B" oder "A und/oder B" verwendet werden. Das gilt Äquivalent für Kombinationen von mehr als zwei Elementen.

Wenn eine Singularform, z. B. "ein, eine" und "der, die, das" verwendet wird und die Verwendung nur eines einzelnen Elements weder explizit noch implizit als verpflichtend definiert ist, können weitere Beispiele auch mehrere

Elemente verwenden, um die gleiche Funktion zu implementieren. Wenn eine Funktion im Folgenden als unter Verwendung mehrerer Elemente implementiert beschrieben ist, können weitere Beispiele die gleiche Funktion unter Verwendung eines einzelnen Elements oder einer einzelnen Verarbeitungsentität implementieren. Es versteht sich weiterhin, dass die Begriffe "umfasst", "umfassend", "aufweist" und/oder "aufweisend" bei deren Gebrauch das Vorhandensein der angegebenen Merkmale, Ganzzahlen, Schritte, Operationen, Prozesse, Elemente, Komponenten und/oder einer Gruppe derselben beschreiben, dabei aber nicht das Vorhandensein oder das Hinzufügen eines oder mehrerer anderer Merkmale, Ganzzahlen, Schritte, Operationen, Prozesse, Elemente, Komponenten und/einer Gruppe derselben ausschließen.

Optionale Komponenten werden im Folgenden mit gestrichelten Linien dargestellt.

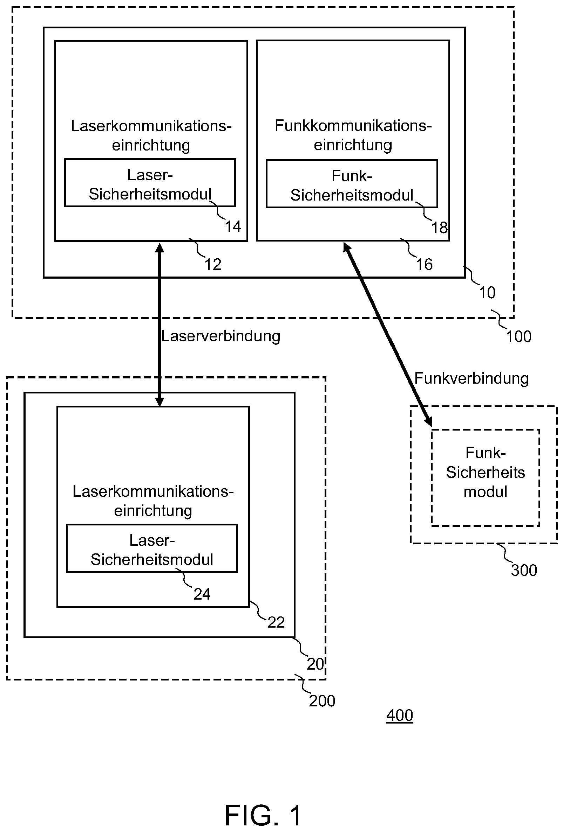

Fig. 1 zeigt oben ein Blockdiagramm eines Ausführungsbeispiels einer Vorrichtung 10 für einen Sendeempfänger einer Höhenplattform, High-Altitude Platform HAP 100, und zur Sicherung von Kommunikationsverbindungen zwischen dem Sendeempfänger und weiteren Sendeempfängern in einem Kommunikationssystem 400. Die Fig. 1 zeigt unten ein Blockdiagramm eines Ausführungsbeispiels einer Vorrichtung 20 für einen Sendeempfänger einer Bodenstation 200 und zur Sicherung einer Kommunikationsverbindung zwischen dem Sendeempfänger und einer Höhenplattform, HAP, in einem Kommunikationssystem 400.

Die Vorrichtung 10 für den Sendeempfänger der HAP 100 umfasst eine Laserkommunikationseinrichtung 12 zur Kommunikation über eine Laserverbindung mit einem ersten weiteren Sendeempfänger 200 und einem Laser-Sicherheitsmodul 14, das ausgebildet ist, um die Laserverbindung durch Verwenden von zusätzlich eingefügten ersten Rauschanteilen auf einer physikalischen Schicht der Laserverbindung zu sichern. Die Vorrichtung 10 umfasst darüber hinaus eine Funkkommunikationseinrichtung 16 zur Kommunikation über eine Funkverbindung mit einem zweiten weiteren Sendeempfänger 300 und einem Funk-Sicherheitsmodul 18, das ausgebildet ist, um die Funkverbindung durch Verwenden von zusätzlich eingefügten zweiten Rauschanteilen auf einer physikalischen Schicht der Funkverbindung zu sichern. Die Fig. 1 illustriert darüber hinaus ein Ausführungsbeispiel einer HAP 100 mit einer Vorrichtung 10 (die HAP ist optional aus Sicht der Vorrichtung 10). In weiteren Ausführungsbeispielen kann die HAP beispielsweise in einem Fluggerät implementiert sein, insbesondere in einem Satelliten, einem Zeppelin oder einem atmosphärischen/stratosphärischen Gleiter. Analog umfasst der zweite weitere Sendeempfänger 300 auch ein Funksicherheitsmodul, um die zusätzlichen Rauschanteile einfügen bzw. entfernen zu können.

Fig. 1 zeigt darüber hinaus eine Vorrichtung 20 für einen Sendeempfänger einer Bodenstation 200 und zur Sicherung einer Kommunikationsverbindung zwischen dem Sendeempfänger und einer HAP 100 in einem Kommunikationssystem 400. Die Vorrichtung 20 umfasst eine Laserkommunikationseinrichtung 22 zur Kommunikation über eine Laserverbindung mit der HAP und ein Laser-Sicherheitsmodul 24, das ausgebildet ist, um die Laserverbindung durch Verwenden von zusätzlich eingefügten Rauschanteilen auf einer physikalischen Schicht der Laserverbindung, zu sichern. Die Laserkommunikationseinrichtung 22 weist dabei eine Sendeapertur zur Abstrahlung eines Lasersignals auf, die mindestens dem 5* 10^5-fachen der Wellenlänge des abgestrahlten Laserlichtes entspricht. Fig. 1 zeigt auch eine Bodenstation 200 (die aus der Vorrichtung 20 optional ist) für ein Kommunikationssystem 400 mit der Vorrichtung 20.

Insofern ist die Bodenstation 200 ein Beispiel für den ersten weiteren Sendeempfänger aus Sicht der HAP 100 zu dem über die Laserverbindung kommuniziert wird. Die Fig. 1 illustriert auch einen zweiten weiteren Sendempfänger 300 mit dem die HAP 100 über die Funkverbindung kommuniziert. Der erste weitere Sendeempfänger 200 kann in Ausführungsbeispielen auch ein Satellit oder eine andere HAP sein. Der zweite weitere Sendeempfänger 300 kann ein Mobilfunkendgerät oder ein gesteuertes Vehikel, wie beispielsweise eine Drohne oder ein Fahrzeug, sein.

Die Laserkommunikationseinrichtungen 12, 22 stellen jeweils ein System dar, das Licht in Form von Laserstrahlen verwendet, um Daten zwischen zwei oder mehr Punkten zu übertragen. Hauptkomponenten und/oder Merkmale einer typischen Laserkommunikationseinrichtung 12, 22 sind beispielsweise eine Laserquelle, ein Modulator beim Sender und entsprechend ein Detektor und Demodulator beim Empfänger. Die Laserquelle ist dabei ein Laser, der das Licht erzeugt. Diese Quelle kann in verschiedenen Wellenlängen arbeiten, z.B. im Infrarotbereich (IR), je nach Anwendung und Anforderungen. Häufig verwendete Laserquellen sind Diodenlaser und Faserlaser. Der Modulator moduliert das Licht, um Daten zu übertragen. Es gibt verschiedene Modulationsverfahren, wie Amplitudenmodulation (AM), Frequenzmodulation (FM) oder Phasenmodulation (PM). Der Sender kann darüber hinaus über eine Senderoptik verfügen, z.B. eine Reihe von Linsen und Spiegeln, die den Laserstrahl formen und ausrichten, um ihn präzise zum Empfänger zu senden. In gleicher Weise kann der Empfänger über eine Empfängeroptik verfügen, beispielsweise optische Komponenten, die den ankommenden Laserstrahl sammeln und auf den Detektor fokussieren. Ein Detektor ist dann ein hochempfindliches Gerät auf der Empfängerseite, oft ein Fotodetektor oder eine Fotodiode, welches das empfangene Licht in elektrische Signale umwandelt. Der Demodulator extrahiert die ursprünglichen Daten aus den empfangenen optischen Signalen. Typischerweise umfasst die Laserkommunikationseinrichtung 12, 22 auch noch einer oder mehrere Signalverarbeitungskomponenten oder -einheiten. Hierbei handelt es sich um elektronische Komponenten, die die empfangenen Signale weiterverarbeiten, filtern und eventuell korrigieren, bevor sie an die Endgeräte weitergeleitet werden.

Vorliegend wird die Laserkommunikation in der Vorrichtung 10 auf der HAP 100 verwendet. Denkbar ist aber

auch die Anwendung einer Vorrichtung 10 in der Raumfahrt und Satellitenkommunikation, Kommunikation zwischen Satelliten, Raumfahrzeugen und Bodenstationen. Laserkommunikation bietet sehr hohe Datenübertragungsraten. Da Laserstrahlen eng gebündelt sind, gibt es weniger Interferenzen mit anderen Kommunikationssystemen und ein Abhörer müsste sich der direkten Sichtverbindung zwischen Sender und Empfänger nähern.

Die Funkkommunikationseinrichtung 16 ist ein System, das elektromagnetische Wellen im Radiofrequenzbereich verwendet, um Daten zwischen zwei oder mehr Punkten drahtlos zu übertragen. Dabei können entsprechende Funkstandards, wie sie beispielsweise durch 3GPP (3rd Generation Partnership Project) vorgeschlagen und entwickelt werden, zum Einsatz kommen. Insofern kann die Funkkommunikationseinrichtung 16 typische Komponenten eines Sendeempfängers für Radiosignale umfassen, wie beispielsweise ein oder mehrere Antennen, Verstärker, Filter, Signalverarbeitungskomponenten etc. insbesondere auf die Antennentechnik wird im Folgenden noch im Detail eingegangen.

Die hier beschriebenen Sendeempfänger können demnach dabei typische Sender- bzw. Empfängerkomponenten enthalten. Darunter können beispielsweise ein oder mehrere Antennen, ein oder mehrere Filter, ein oder mehrere Mischer, ein oder mehrere Verstärker, ein oder mehrere Diplexer, ein oder mehrere Duplexer, Funkmodem, optische und/oder elektronische Signalverarbeitungskomponenten, usw. fallen. In Ausführungsbeispielen können die entsprechenden Signalverarbeitungskomponenten einem beliebigen Controller oder Prozessor oder einer programmierbaren Hardwarekomponente entsprechen. Beispielsweise können Kontrollmodule auch als Software oder Computerprogramm realisiert sein, die oder das für eine entsprechende Hardwarekomponente programmiert ist.

In Ausführungsbeispielen kann das System 400, Mobilfunksystem oder Mobilkommunikationssystem 400 beispielsweise einem der Mobilfunksysteme entsprechen, die von entsprechenden Standardisierungsgremien, wie z.B. der 3rd Generation Partnership Project (3GPP)-Gruppe, standardisiert werden. Beispielsweise umfassen diese das Global System for Mobile Communications (GSM), Enhanced Data Rates for GSM Evolution (EDGE), GSM EDGE Radio Access Network (GERAN), das Universal Terrestrial Radio Access Network (UTRAN) oder das Evolved UTRAN (E-UTRAN), wie z. B. das Universal Mobile Telecommunication System (UMTS), Long Term Evolution (LTE) oder LTE-Advanced (LTE-A), Systeme der fünften Generation (5G), 6G oder auch Mobilfunksysteme anderer Standards, wie z. B. Wireless Local Area Network (WLAN), IEEE802.11, sowie generell ein System, das auf einem Zeitbereichsvielfachzugriffsverfahren (auch engl. "Time Division Multiple Access (TDMA)"), Frequenzbereichsvielfachzugriffsverfahren (auch engl. "Frequency Division Multiple Access (FDMA)"), Kodebereichsvielfachzugriffsverfahren (auch engl. "Code Division Multiple Access (CDMA)"), Orthogonalen Frequenzbereichsvielfachzugriffsverfahren (auch engl. "Orthogonal Frequency Division Multiple Access (OFDMA)") oder einer anderen Technologie bzw. Vielfachzugriffverfahren basiert. Im Folgenden werden die Begriffe Mobilfunksystem, Mobilfunknetz, Mobilkommunikationssystem und Mobilfunknetzwerk synonym benutzt.

In Ausführungsbeispielen können die ein oder mehreren Signalverarbeitungskomponenten zur digitalen Signalverarbeitung ausgebildet sein. Dabei können sie als eine oder mehrere Verarbeitungseinheiten, ein oder mehrere Verarbeitungsgeräte, ein beliebiges Mittel zur Verarbeitung, ein beliebiges Mittel zur Bestimmung, ein beliebiges Mittel zur Berechnung, wie einem Prozessor, einem Computer oder einer programmierbaren Hardwarekomponente, die mit entsprechend angepasster Software betrieben werden kann, implementiert werden. Beispielsweise können die ein oder mehreren Signalverarbeitungskomponenten auch Speicher umfassen, die entsprechende Information über die Signale zwischenspeichern bzw. Konfigurationsinformation vorhalten. Die beschriebene Funktion der ein oder mehreren Signalverarbeitungskomponenten kann auch in Software implementiert sein, die dann auf einer oder mehreren programmierbaren Hardwarekomponenten ausgeführt wird. Solche Hardwarekomponenten können einen Universalprozessor, einen digitalen Signalprozessor (DSP), einen Mikrocontroller usw. umfassen. Auch das Laser-Sicherheitsmodul 14, 24 bzw. das Funksicherheitsmodul 18 können solche Signalverarbeitungskomponenten umfassen, die geeignet sind, zusätzliche Rauschanteile auf der physikalischen Schicht einzufügen.

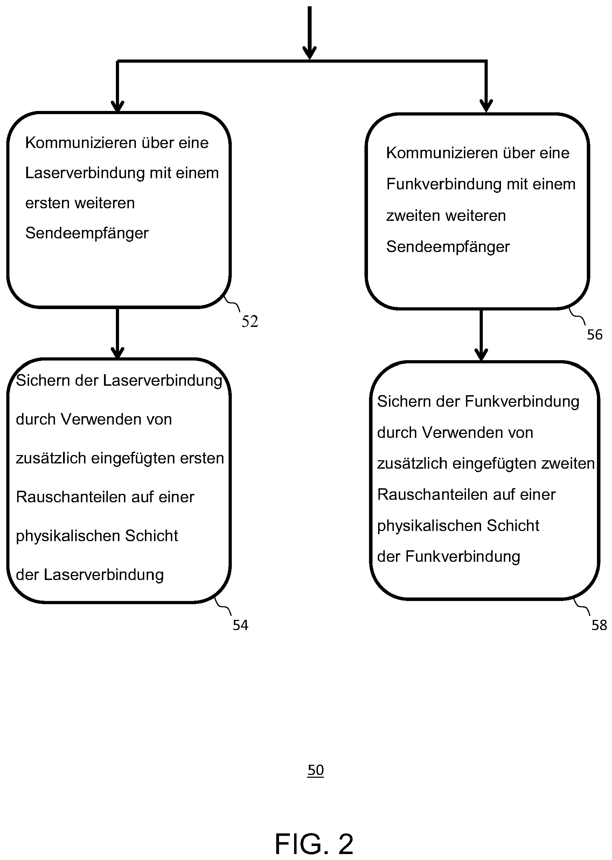

Die Fig. 2 zeigt ein Ablaufdiagramm eines Ausführungsbeispiels eines Verfahrens 50 für einen Sendeempfänger einer HAP 100 zur Sicherung von Kommunikationsverbindungen zwischen dem Sendeempfänger und weiteren Sendeempfängern in einem Kommunikationssystem 400. Das Verfahren 50 umfasst ein Kommunizieren 52 über eine Laserverbindung mit einem ersten weiteren Sendeempfänger 200 und ein Sichern 54 der Laserverbindung durch Verwenden von zusätzlich eingefügten ersten Rauschanteilen auf einer physikalischen Schicht der Laserverbindung. Das Verfahren 50 umfasst ferner ein Kommunizieren 56 über eine Funkverbindung mit einem zweiten weiteren Sendeempfänger 300 und ein Sichern 58 der Funkverbindung durch Verwenden von künstlich oder zusätzlich eingefügten zweiten Rauschanteilen auf einer physikalischen Schicht der Funkverbindung.

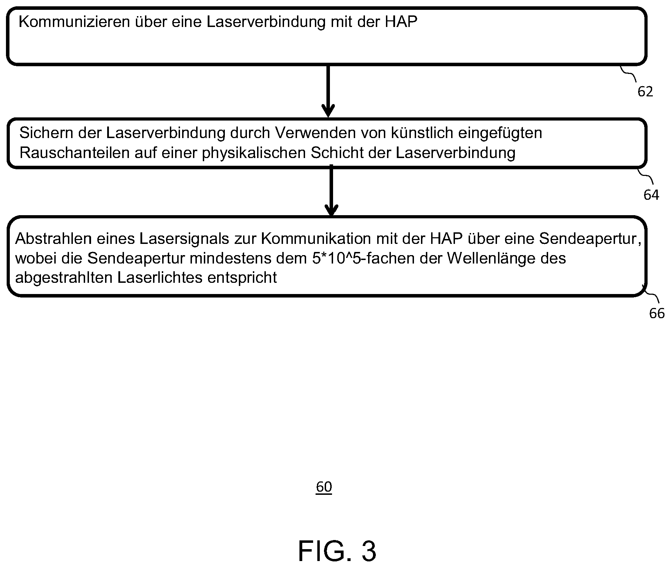

Fig. 3 zeigt ein Ablaufdiagramm eines Verfahrens 60 für einen Sendeempfänger einer Bodenstation 200 und zur Sicherung einer Kommunikationsverbindung zwischen dem Sendeempfänger und einer HAP 100 in einem Kommunikationssystem 400. Das Verfahren 60 umfasst ein Kommunizieren 62 über eine Laserverbindung mit der HAP 100 und ein Sichern 64 der Laserverbindung durch Verwenden von künstlich eingefügten Rauschanteilen auf einer physikalischen Schicht der Laserverbindung. Das Verfahren 60 umfasst darüber hinaus ein Abstrahlen eines Lasersignals zur Kommunikation mit der HAP 100 über eine Sendeapertur, wobei die Sendeapertur mindestens dem 5*10^5-fachen der Wellenlänge des abgestrahlten Laserlichtes entspricht.

Ausführungsbeispiele können daher ein Verfahren zur Absicherung verrauschter HAP-Kommunikationskanäle schaffen.

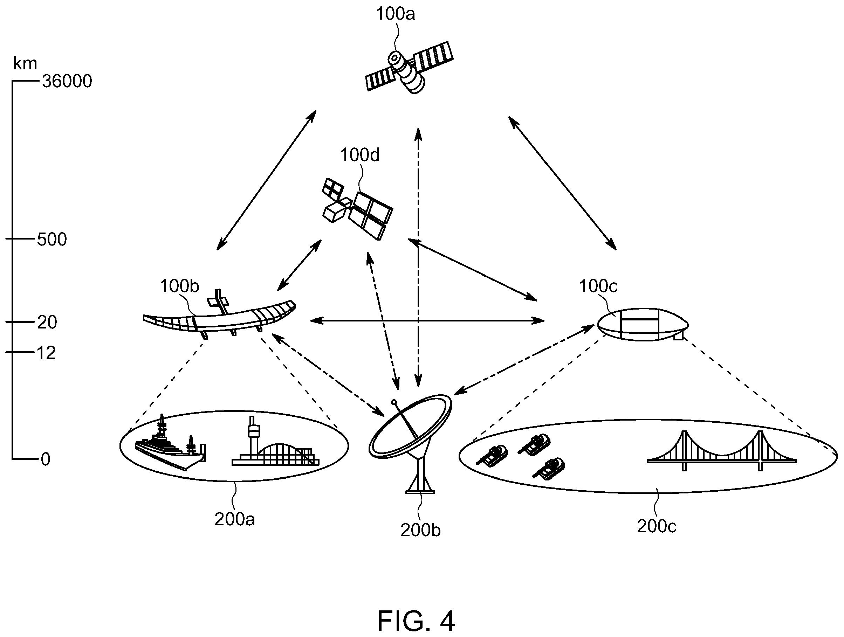

Fig. 4 zeigt eine Übersicht über eine mehrschichtige Architektur nicht-terrestrischer Netzwerke. Weitere Details über die mehrschichtige Architektur Nicht-Terrestrischer Netzwerke (NTN) können auch hier:
https://www.japcc.org/articles/high-altitude-platform-systems/
gefunden werden. Anbieter in Deutschland und Europa sind beispielsweise die Firmen Haption, OHB Systems, DLR (Deutsches Zentrum für Luft- und Raumfahrt) und viele mehr. Die Fig. 4 zeigt links eine Höhenskala in km. So befinden sich auf etwa 3600km Höhe ein geostationärer Satellit 100a der mit einer HAP 100b auf einem stratosphärischen Gleiter und einer HAP 100c in einem Zeppelin kommuniziert. Weitere Kommunikation kann auch zwischen den HAPs 100b, 100c und dem LEO-Satelliten 100d erfolgen. Darüber hinaus zeigt die Fig. 4 verschiedene bodengebundene Kommunikationseinrichtungen, wie ein Mobilfunknetz mit geringem Nutzdatenaufkommen 200a, eine Bodenstation 200b und ein Mobilfunknetz mit höheren Nutzdatenaufkommen 200c.

Die mehrschichtige Architektur eines NTN, so wie es im Rahmen der 6G Architekturen vorgeschlagen wird, wird in Fig. 4 gezeigt. Auf der unteren Ebene befinden sich terrestrische Netzwerke in Ballungsräumen, wobei zwischen hohen 200c und niedrigen 200a Durchsatz-Regionen unterschieden wird. Darüber werden High-Altitude Plattformen 100b, c stationiert, die je nach Datendurchsatz unterschiedliche Größen annehmen können. Gezeigt werden Drohnen und Luftschiffe 100b, c, die von Bodenstationen 200b mit Daten versorgt werden und diese in ihre Versorgungsregionen 100a, c verteilen. Im Weltraum darüber, auf der dritten Ebene des Architekturmodells, befinden sich Satelliten 100a, d auf unterschiedlichen Flughöhen. LEO- Satelliten umkreisen die Erde schnell und haben nur wenige Minuten Kontakt zu den Elementen auf der terrestrischen bzw. der HAP-Ebene. MEO oder GEO-Satelliten umkreisen die Erde auf höheren Flugebenen, dafür langsamer bzw. stationär. LEO-Satelliten (Flughöhe 400-500km) weisen dabei eine deutlich niedrigere Latenz auf und sind für die Echtzeitanwendungen der zukünftigen Mobilfunknetzwerke zu bevorzugen. Die Latenz einer Verbindung eines erdgebundenen Gerätes mit einer HAP-Plattform ist dabei etwa um einen Faktor 15/400 = 1/26 niedriglatenter als eine LEO-Satellitenverbindung. HAPs (High-Altitude Plattformen) sind mögliche Realisierungen eines nicht-terrestrischen Netzwerks als zusätzlicher, dritter Layer zwischen der terrestrischen und der Satelliten Ebene. Diverse Hersteller von High Altitude Plattformen, die mit Hilfe von stratosphärischen Flugzeugen, Ballons o.ä. realisiert werden, sind bekannt. Eine Herausforderungen besteht in der Stabilisierung einer HAP im Luftraum über Metropolregionen.

HAPs 100b, 100c versorgen die unter ihnen liegende Metropolregion und nutzen dazu standardisierte Mobilfunktechnologie mit Wellenlängen im GHz und unteren THz Bereich. Vom Einsatz der MIMO-Technologie ((Massive) Multiple-Input-Multiple-Output), d.h. der Verwendung von Strahlungskeulen oder gerichteten, fokussierten Funkstrahlen wird ausgegangen. Die zu versorgenden Regionen lassen sich dazu dynamisch anpassen. Genauso werden die HAPs untereinander kommunizieren und somit eine, von Satellitennetzwerken und terrestrischen Netzwerken, getrennte Netzwerkschicht ermöglichen. Der Trend zu nicht-terrestrischen Kommunikationsdiensten wird durch erste Demonstratoren von Notfallnachrichten über Satellitennetzwerke befeuert, auch ermöglichen diese Netzwerke alternative Backbones zwischen den Metropolregionen unserer Welt.

Ausführungsbeispiele schaffen eine HAP, die ihre Kommunikationsdienste mit Hilfe von Antennen in GHz/THz Spektren beispielsweise im Einklang mit den in zukünftigen 6G+ Netzwerken verwendeten Bandbreiten anbietet. Dabei wird davon ausgegangen, dass die HAP mit Sende- und Empfangsantennen und der notwendigen Elektronik zur Versorgung der Antennen und zur Verarbeitung der Funksignale ausgestattet sind. Der Einsatz eines IR-Lasers zum Einsatz für dedizierte Breitbandverbindungen zu Bodenstationen bzw. zu anderen HAPs wird im Folgenden analysiert. Verschlüsselung und Datensicherheit spielt bei den neuen, nicht-terrestrischen Netzwerken eine große Rolle. So müssen dieselben Sicherheitsstandards der Kommunikation zu, von und zwischen den HAPs etabliert werden, wie sie schon bei terrestrischen Netzwerken existieren.

Ausführungsbeispiele nutzen darüber hinaus das Einfügen von Rauschanteilen auf der physikalischen Schicht zur Absicherung der Verbindungen, so lässt sich z. B. mit "Physical Layer Security" (PLS) eine informationstheoretisch sichere Verschlüsselung der übertragenen Daten über HAP-Netzwerke realisieren. PLS gilt als informationstheoretisch sicher, solange der gewollte Empfänger ein besseres Signal-zu-Rausch (S/R auch engl signal-to-noise ratio (SNR)) Verhältnis hat als der mögliche Angreifer, vgl. M. Bloch, M. Hayashi and A. Thangaraj, "Error-control coding for physical-layer secrecy," Proc. IEEE, vol. 103, no. 10, pp. 1725-1746, 2015. Vorliegend werden zur PLS-Sicherheitsbeweise abhängig von dem S/R des möglichen Angreifers geliefert. Diese wurden in einem Demonstrator für WiFi Netzwerke und 5G Netzwerke verifiziert. Erste Demonstratoren für Satellitennetzwerke entstehen.

Die Realisierung der PLS-Methode wird als modulare Operation auf den digitalen Datenstrom angewendet, bevor dieser in das Sendegerät geschickt wird. Die Sicherheit wird durch einen Sicherheitscode realisiert, der über ein mathematisches Verfahren, welches die Nachricht mit einer Folge von, beim Sender und Empfänger zugleich verteilten, Zufallszahlen kodiert. Das Sendegerät übernimmt dann den Versand der Nachricht. Auf der Empfängerseite läuft der Prozess in Gegenrichtung ab. Das Verfahren verläuft analog zu den in EP22209986 beschriebenen Verfahren für Next-Generation-Mobilfunk und WiFi Verbindungen. Der Inhalt der EP22209986 wird in die vorliegende Offenbarung durch

Verweis mit aufgenommen.

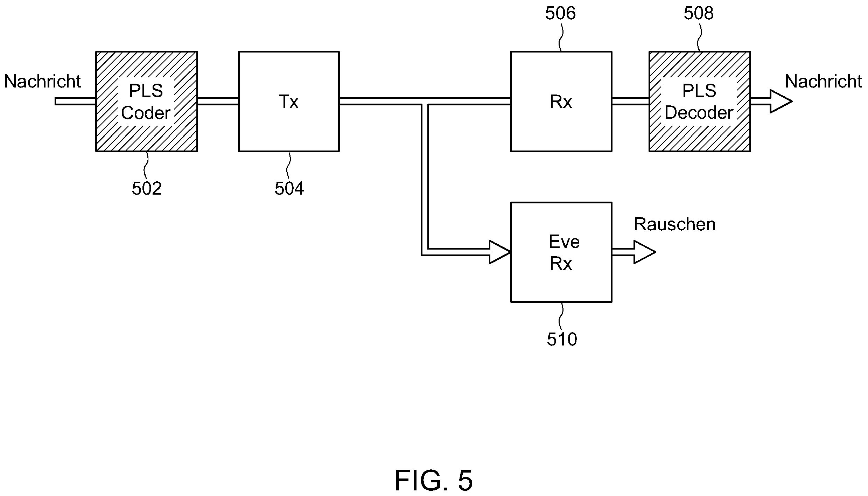

Fig. 5 zeigt ein Blockdiagramm einer Absicherung auf der physikalischen Schicht in einem Ausführungsbeispiel. Fig. 5 zeigt die Abfolge der Prozessschritte. Der PLS Encoder 502 erzeugt aus einer Nachricht m einen PLS Code c, indem die Nachricht m mit einer Folge von Zufallszahlen r verarbeitet wird, so dass c = f^(-1)(m, r). In der Abbildung m -> f{-1}(m,r) steckt auch Zufall, welchen allerdings nur der Sender benötigt. Denn der Sender wählt aus allen möglichen Elementen x, so dass f(x,r)=m, zufällig ein x aus. Die Nachricht wird dann über die Sendeeinheit 504 and den Empfänger geschickt, wo die Nachricht zunächst von der Empfangseinheit 506 empfangen wird. Der Decoder 508 ist wieder in der Lage die Nachricht m über m = f(c,r) zu berechnen. Die Besonderheit ist, dass ein ungewollter Empfänger Eve 510 nicht in der Lage ist, die Nachricht m zu bestimmen. Die Details des mathematischen Verfahrens werden in EP22209986 im Detail beschrieben und hier mit aufgenommen.

Die Fig. 5 zeigt eine Darstellung der "Physical Layer Encodings" nach EP22209986. Die Sende- (Tx 504) und Empfangseinheiten (Rx 506) sind die Endpunkte eines verrauschten Kommunikationskanals. Die Anwendung des PLS-Verfahrens durch einen modularen Rechner vor der Sendeeinheit (Coding 502) und nach der Empfangseinheit (Decoding 508) erzeugt ein Signal, welches durch den bestimmten Empfänger dekodierbar ist, ein ungewollter Empfänger (Eve 510) aber nur Rauschen messen kann.

Die Laserkommunikationseinrichtung 12 kann in weiteren Ausführungsbeispielen ferner ausgebildet sein, um Information über eine Übertragungsqualität mit dem ersten weiteren Sendeempfänger zu kommunizieren und ferner ausgebildet sein, um Übertragungsparameter und/oder eine Vorschrift für das Einfügen der Rauschanteile für die Laserverbindung einzustellen. Es kann demnach für die Laserverbindung eine Regelung oder Steuerung implementiert sein, die die Übertragungsparameter, beispielsweise eine Coderate, Modulation, Sendeleistung, usw. an aktuelle Gegebenheiten anpasst. Typischerweise geschieht dies anhand von Messungen/Schätzungen am Empfänger, die ein Maß für die Übertragungsqualität darstellen, so kommen beispielsweise Bitfehlerraten, wie Bit Error Rate, Block Error Rate (BER), Frame Error-Rate (FER), usw. in Frage oder auch Bitenergie bezogen auf die Rauschleistungsdichte (Eb/N0), Signal-zu Interferenz Verhältnis, Signal-zu Rausch Verhältnis (SNR) oder Signal-zu-Rausch-und-Interferenz Verhältnis in Frage (SINR), usw. die auch miteinander zusammenhängen. Typischerweise erfordert eine erfolgreiche Übertragung eine gewisse Übertragungsqualität, die beim Empfänger bestimmt wird und dann über Rückmeldung an den Sender nachgeführt wird.

In gleicher Weise kann das Einfügen der Rauschanteile an die Übertragung angepasst werden. Wie bereits oben erläutert, kann die Abhörsicherheit dann gewährleistet werden, wenn die Signalqualität (z.B. SNR, SIR, SINR, Eb/N0 usw.) bei einem potentiellen Abhörer zur Signalqualität beim legitimen Empfänger schlechter ist. Beispielsweise stehen diese in einem gewissen Verhältnis und sind bestimmend für einen Anteil des zur Absicherung notwendigen Rauschanteils. So können die Übertragungsparameter eingestellt werden, basierend auf der Übertragungsqualität und basierend auf einem zur Absicherung der Laserverbindung notwendigen Signalqualitätsunterschied für einen Abhörer relativ zu einer Signalqualität beim legitimen Empfänger und/oder basierend auf der Übertragungsqualität und basierend auf einem geschätzten Signalqualitätsunterschied für einen Abhörer relativ zu einer Signalqualität beim legitimen Empfänger, um die Nachricht vor einem Abhören zu sichern. Nachdem der Signalqualitätsunterschied beim Abhörer nicht gemessen werden kann, wird dieser beispielsweise dadurch geschätzt, dass man einen Mindestabstand zwischen legitimen Empfänger und Abhörer annimmt, bzw. Annahmen in Bezug auf die Empfangsapertur, die Qualität des Empfängers und das Rauschen beim Abhörer macht. Daraus ergibt sich mit den bekannten Ausbreitungsverhältnis auch eine Annahme oder Schätzung für eine empfangbare Energie/Leistung des Nutzsignals bei Abhörer, worauf sich eine Schätzung der Signalqualität bei Abhörer stützen lässt, zumindest jedoch ein Signalqualitätsunterschied zwischen Abhörer und legitimen Empfänger.

Gleiches gilt für die Funkkommunikationseinrichtung 16, die ausgebildet sein kann, um Information über eine Übertragungsqualität mit dem zweiten weiteren Sendeempfänger zu kommunizieren und ferner ausgebildet sein kann, um Übertragungsparameter und/oder eine Vorschrift für das Einfügen der Rauschanteile für die Funkverbindung einzustellen. Analog der obigen Betrachtung kann dies basierend auf der Übertragungsqualität und basierend auf einem zur Absicherung der Funkverbindung notwendigen Signalqualitätsunterschied für einen Abhörer relativ zu einer Signalqualität beim legitimen Empfänger erfolgen. Ergänzend oder alternativ kann dies auch basierend auf der Übertragungsqualität und basierend auf einem geschätzten Signalqualitätsunterschied für einen Abhörer relativ zu einer Signalqualität beim legitimen Empfänger erfolgen, um die Nachricht vor einem Abhören zu sichern.

Die zusätzlich eingefügten ersten und/oder zweiten Rauschanteile können ferner auf einem oder mehreren Zufallswerten basieren, die der HAP und dem ersten und/oder dem zweiten weiteren Sendempfänger bekannt sind. Diese Zufallswerte werden auch als "Seed" bezeichnet und können so Eingangswerte für eine Funktion darstellen, die dann ein oder mehrere weitere Zufallswerte generiert. Dabei sind bezüglich der Verteilung der Zufallswerte verschiedene Szenarien möglich, beispielsweise können die Zufallswerte ein gemeinsames Geheimnis des Senders und Empfängers darstellen oder sie können auch öffentlich bekannt sein. Weitere Details finden sich in EP 22209986, EP 23196965 und EP 24174614 deren Inhalte hierin durch Verweis inkludiert sind.

Die Sicherheit der Methode hängt von den physikalischen Eigenschaften des Kommunikationsverfahrens und

den daraus resultierenden Rauschverhältnissen an unterschiedlichen Empfängern ab. Letztendlich muss bewiesen werden, unter welchen Kriterien ein potentieller Angreifer ein besseres Signal-zu-Rausch (S/R, SNR) Verhältnis erlangen kann als der rechtmäßige Empfänger der Nachricht, um die Sicherheit des PLS-Verfahrens für HAP-Kommunikation bewerten zu können. Das S/R, SNR ist dabei als Beispiel zur Bewertung der Signalqualität zu verstehen. Ergänzend oder alternativ können auch andere Signalqualitätsmaße betrachtet werden, wie beispielsweise SIR, SINR, Eb/N0 usw. Welches dieser Qualitätsmaße im jeweiligen System verwendet wird, hängt von der Systemplanung und den Systemparametern ab, beispielsweise sind Systeme bekannt, die durch die vom System selbst generierte Interferenz begrenzt sind und nicht durch thermisches Rauschen.

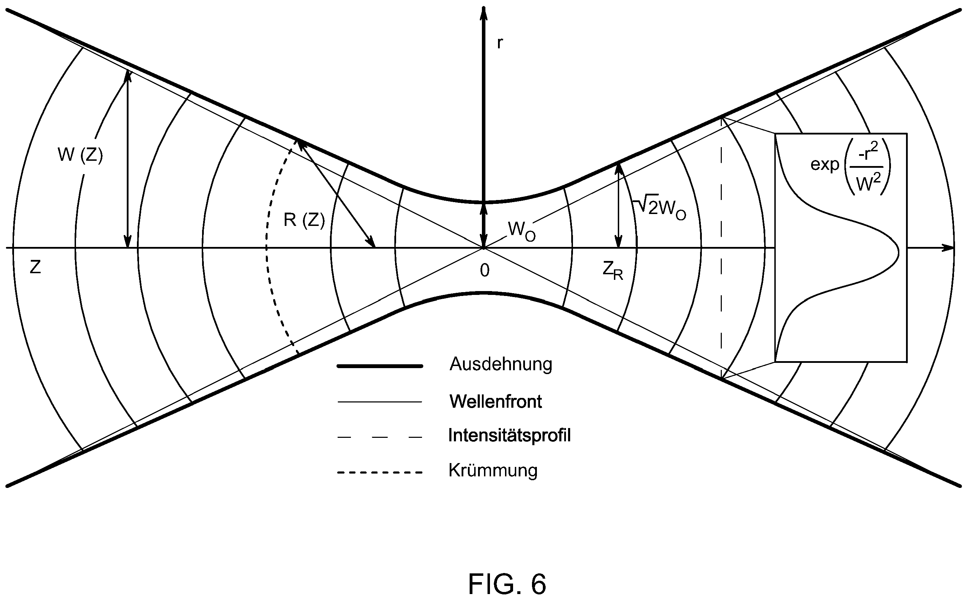

Daher erfolgt nunmehr eine Sicherheitsbetrachtung bei HAP-Kommunikation. Fig. 6 zeigt eine Strahlkaustik im Grundmode $T_{00}$ eines elektromagnetischen Feldes eines Laserstrahls. Die Ausbreitungsrichtung verläuft von links nach rechts und der Radius nach oben.

Die Propagation eines IR-Laserstrahls lässt sich über eine Strahlkaustik wie in Fig. 6 gezeigt beschreiben. Die transversale Ausdehnung eines Laserstrahls erfolgt in seiner Grundmode entsprechend einer Gauß'schen Verteilung, wobei die dicke Linie (begrenzend oben und unten) in Fig. 6 der Breite der Verteilung der Strahlintensität entspricht, Formel 1:

$$I(r,z) = \frac{1}{2} c_0 \varepsilon_0 |E(r,z)|^2 = I_0 \left( \frac{w_0}{w(z)} \right)^2 e^{-\frac{2r^2}{w(z)^2}}$$

$w_0$ bezeichnet die transversale Ausdehnung der Strahltaille und w(z) die Entwicklung der transversalen Ausdehnung als Funktion der Propagationsweite z. Die Annahme der TEM00 Grundmode (Transversale Elektromagentische Welle) eines Laserstrahls ist realistisch und lässt sich über Lochblenden o.ä. im Resonator erzwingen. Fernfelddivergenz und Strahltaille bilden relativ zur Wellenlänge des Lasers eine Konstante. Die Wellenfronten sind nicht eben, sondern generell gekrümmt. 3*w(z), d.h. 3x die Breite der Strahlkaustik des Gauß'schen Strahls, entsprechen ungefähr 99,8% der gesamten Laserstrahlintensität innerhalb einer kreisförmigen Empfängerfläche/Antenne (drei Standardabweichungen der Gauß Verteilung). Je geringer die Intensität des Primärstrahls an den Schwänzen der Gauß Verteilung, desto schlechter das Signal zu Rausch Verhältnis an diesen Stellen.

Die transversale Ausdehnung einer TEM_00 Grundmode lässt sich berechnen durch:

$$w(z) = w_0 \sqrt{1 + \left( \frac{z}{z_R} \right)^2},$$

wobei $z_R$ als Rayleighlänge bezeichnet wird. Die Rayleighlänge ist definiert durch:

$$z_R = \frac{\pi \cdot w_0^2}{\lambda}.$$

Somit lassen sich die transversalen Dimensionen eines Laserstrahls abhängig von der Wellenlänge des Lichts und der Dimension des Senders (Laserapertur) in Abhängigkeit von der Distanz zwischen Bodenstation und HAP abschätzen:

Typische Daten von Laser-Kommunikationssystemen sind:

| Strahlcharakteristik EDRS System | Typische Werte |
|---|---|
| Wellenlänge [Wellenlänge-SAT] | 1064,625 nm $\pm$11 pm |
| Apertur $w_0$ [Telescopes] | 0,1m [Laserstrahl] |
| Rayleighlänge $z_R$ | 29,50 km |
| Satelliten Flughöhe z | 15 km |
| Strahlbreite w(z) am Satelliten | 0,11 m |

Somit weitet sich eine $TEM_{00}$ Mode eines Laserstrahls mit 1064nm Wellenlänge bei einer Apertur von 10cm um 12% auf. Innerhalb einer Antennengröße von 35cm Apertur befinden sich also mehr als 99% der Sendeleistung. Ein IR-

Laser mit 10cm Apertur verhält sich also wie ein klassischer Lichtstrahl zwischen Sender und Empfänger und vergrößert sich nur marginal. Diese räumliche Eingrenzung des gesendeten Signals bedeutet schon eine signifikante Erhöhung der Kommunikationssicherheit, weil ein möglicher Angreifer im Perimeter des Laserstrahls aufhalten muss, um ein signifikantes Signal empfangen zu können. Es ist anzumerken, dass aufgrund der stationären Position einer HAP die Verbindung nur minimaler zeitlicher Schwankung (durch Wind & Wetter) unterliegt.

Im Falle einer kleineren Empfangsantenne oder einer kleinerer Sendeapertur muss die empfangene Leistung entsprechend der transversalen Verteilung des Laserstrahls korrigiert werden. Dies wird mathematisch über ein Integral der transversalen Verteilung I(r,z) an einem Abstand z ausgedrückt und lässt sich somit über die Fehlerfunktion erf(x) ausdrücken.

Die Strahlkaustik hängt von der Apertur der Sendeantenne ab. Als transversale Ausdehnung der Strahlkaustik ergibt sich für verschiedene Aperturen der Sendeantenne

| Apertur | Rayleigh Länge | Strahltaille w(z) nach z=15km | % Aufweitung |
|---|---|---|---|
| 1m | 2950km | 1m | < 0,01% |
| 0,25m | 184km | 0,25m | < 1% |
| 0,1m | 29,5km | 0,11m | 12% |
| 0,01m | 295m | 5,1m | *510%* |

Je grösser die Apertur des Senders, desto reduzierter die Aufweitung des Laserstrahls. Um diesen Effekt ausnutzen zu können, wird der Sender z.B. eine newtonsche Strahloptik verwenden, um die Apertur des Senders zu vergrößern. In manchen Ausführungsbeispielen weist die Laserkommunikationseinrichtung 12 eine Sendeapertur zur Abstrahlung eines Lasersignals auf die mindestens dem 10^5-fachen, dem 5*10^5-fachen oder 10^6-fachen der Wellenlänge des abgestrahlten Laserlichtes entspricht. Die Laserkommunikationseinrichtung 12 kann darüber hinaus auch eine Empfangsapertur zum Empfang eines Lasersignals aufweisen, die mindestens dem 10^5-fachen der Wellenlänge des empfangenen Laserlichtes entspricht. In gleicher Weise kann die Vorrichtung 20 eine entsprechende Empfangsapertur aufweisen. Die Laserkommunikationseinrichtung 22 kann eine Empfangsapertur zum Empfang eines Lasersignals aufweisen, die mindestens dem 10^5-fachen, dem 5*10^5-fachen oder dem 10^6-fachen der Wellenlänge des abgestrahlten Laserlichtes entspricht und/oder die Empfangsapertur entspricht mindestens einer Halbwertsbreite eines Laserstrahls der Höhenplattform auf dem Boden. Hier können auch Parabolantennen/-spiegel bzw. Teleskope zum Einsatz kommen.

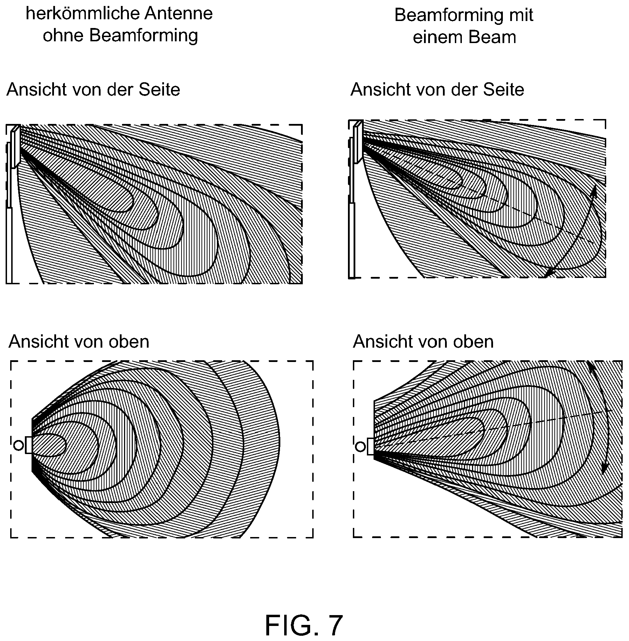

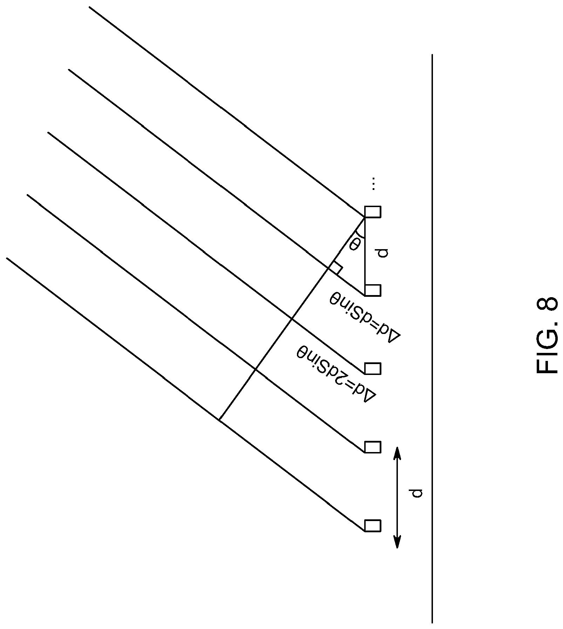

Im Folgenden wird die Propagation von MIMO THz-Mobilfunk betrachtet. Gerichteter Mobilfunk im GHz und THz Bereich lässt sich mit Hilfe von Antennenkonstellationen und Phasenkopplung erreichen. Um die transversale räumliche Ausdehnung einer Mobilfunk-MIMO Keule, so wie sie in Fig. 7 dargestellt ist, zu berechnen. Fig. 7 zeigt Beamforming (Strahlformung) in 5G/6G Mobilfunknetzwerken mit Hilfe von Antennenarrays. Fig. 7 zeigt links die Energieverteilung einer herkömmlichen Antenne ohne Beamforming, oben in eine Ansicht von der Seite (Strahl ist von einem Funkturm nach unten gerichtet) und unten in einer Ansicht von oben. Auf der rechten Seite der Fig. 7 sind die gleichen Ansichten mit Beamforming dargestellt (oben Seitenansicht, unten Draufsicht). Es ist deutlich zu erkennen, wie die abgestrahlte Energie durch die Strahlformung auf einen relevanten Bereich fokussiert werden kann. Weitere Details können hier:
https://www.ssk.de/SharedDocs/Beratungsergebnisse/DE/2021/2021-12-10_Stgn_5G Mobilfunk.pdf?_blob=publicationFile&v=4
eingesehen werden. Nimmt man im einfachsten Fall ein lineares Array von einzelnen Sendeantennen an, wie in Fig. 8 dargestellt wird, kann man die transversale Dimension einer MIMO/Beamforming-Strahlungskeule berechnen. Fig. 8 zeigt eine Illustration zur Berechnung der transversalen Dimension eines Antennenstrahls. Fig. 8 zeigt eine Anordnung von gleichen Antennenelementen, die im Abstand d voneinander in einem Antennenfeld (Array) angeordnet sind.

Im Fernfeld der MIMO-Antenne (Antennenfeld) überlagern sich elektromagnetischen Wellen phasengerecht (d.h. kohärent) und geben ihre Energie an einen Empfänger ab. Haben dabei die Antennen eines linearen Arrays den Abstand d, so erzeugen sie unter dem Winkel $\theta$ einen Gangunterschied von d sin $\theta$ unter benachbarten Sendeantennen. Der Phasenunterschied beträgt $\Delta\phi = {2\pi d \sin\theta}/{\lambda}$, wobei $\lambda$ die Wellenlänge ist.

Die maximale Auflösung der Phase beträgt $\frac{2\pi}{N}$, wobei N die Anzahl der Antennenelemente ist. Die Winkelauflösung $\Delta\theta$ wird gefunden, indem man zwei

$$\varphi_1 = {2\pi d \sin\theta}/{\lambda}$$

und

$$\varphi_2 = {2\pi d \sin(\theta + \Delta\theta)}/{\lambda}$$

betrachtet und deren Differenz

$$\varphi_2 - \varphi_1 = \frac{2\pi}{N} = {2\pi d \sin(\theta + \Delta\theta)}/{\lambda} - {2\pi d \sin\theta}/{\lambda}$$

nach $\Delta\theta$ auflöst. Nähern wir die Sinusfunktion als Taylorreihe an, so erhalten wir $\Delta\theta = \frac{\lambda}{Nd}$. Wird der Abstand d nun mit der Wellenlänge gleichgesetzt, d.h. $d = \frac{\lambda}{2}$, so beträgt die Winkelauflösung einer MIMO-Keule in Radian (FWHM, engl. Full Width at Half Maximum, Halbwertsbreite des Antennenstrahls):

$$\Delta\theta_{Mimo} = \frac{2}{N}.$$

Die folgende Tabelle zeigt die Winkelauflösung und die damit einhergehende abgedeckte Fläche auf der Erde (r = 15km tan 1/*N*) in Abhängigkeit der Anzahl der Sender eines linearen Antennenarrays:

| **Anzahl der Antennen** | **Winkelauflösung [rad]** | **Abdeckungsradius [m]** |
|---|---|---|
| **10** | 0,2 | 3040 |
| **100** | 0,02 | 300 |
| **1024 [5]** | 0,00195 | 29,25 |

Ein lineares Antennenarray von 1024 Antennen erzeugt somit einen bleistiftartige Millimeterwellenausbreitung, deren zentrales Maximum auf der Erdoberfläche einen Radius von nur 29,25m abdeckt.

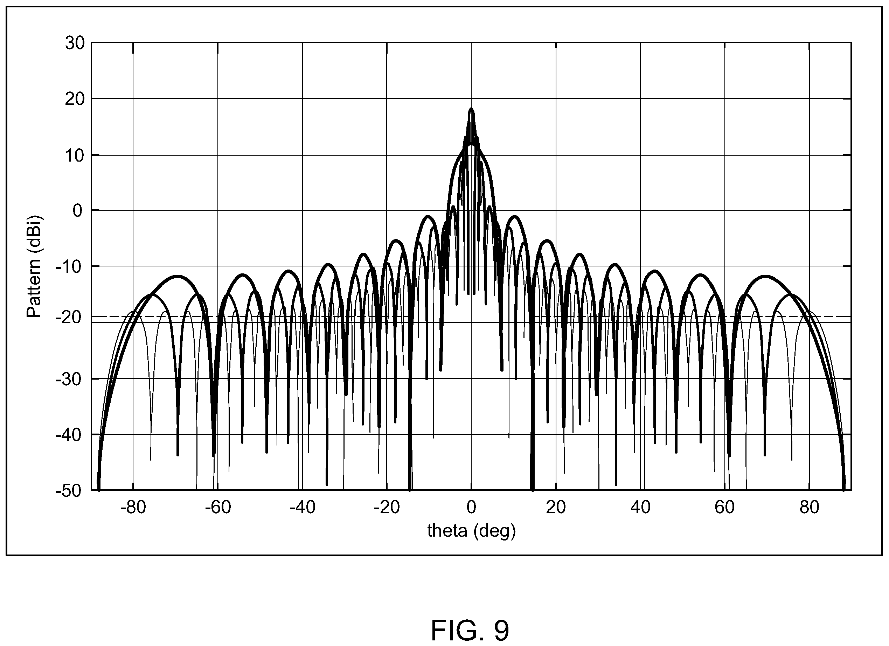

Somit sind Antennenarrays in der Lage, einen räumlich sehr begrenzte Ausleuchtungsregion zu definieren. Der ausgesendete Strahl hat dabei eine transversale Ausdehnung, wie in Fig. 9 gezeigt. Fig. 9 eine Illustration zum Abstrahlverhalten linearer Antennenarrays mit N=16, 32 oder 64 Antennen. Der Winkel Theta in Grad ist auf der Abszisse aufgetragen und der Antennengewinn in dBi (in dB im Vergleich zu einem isotropen Strahler) auf der Ordinate. Es ist zu erkennen, dass mit steigender Anzahl der Antennenelemente der Gewinn in der Hauptrichtung (0 Grad) steigt und die Breite der Hauptkeule abnimmt. Gleichzeitig fällt mit steigender Anzahl der Antennenelemente der Gewinn der Nebenmaxima. Weitere Details zum Abstrahlverhalten linearer Antennenarrays mit N=16, 32 oder 64 Antennen finden sich in der Zeitschrift HF-Praxis aus dem November 2019.

Die Nebenmaxima, die in Fig. 9 zu erkennen sind, sind in Ihrer Leistung 20-30dB geringer als das zentrale Maximum. Der PLS-Sicherheitscode sollte in der Lage sein, die schwächeren Signale zu sichern, während das Signal für einen Empfänger innerhalb des zentralen Maximums dekodierbar bleibt. Insofern ist die Funkkommunikationseinrichtung 16 beispielsweise ausgebildet, um einen Antennenstrahl mit einer oder mehreren Antennen zu formen, dessen Halbwertsbreite kleiner als 0,1%, 1%, 2%, der 5% eines Abstands zu den ein oder mehreren Antennen ist. In weiteren Ausführungsbeispielen kann der Antennenstrahl auf dem Boden eine Halbwertsbreite von weniger als 1m, 2m, 5m 10m, 20m, 30m, 50m aufweisen. Die Funkkommunikationseinrichtung 16 kann ferner ein Antennenfeld mit mehr als 1000, 2000, 3000 oder mehr Antennenelementen aufweisen.

Im Folgenden wird das Signal-zu-Rauschverhältnis als Beispiel für ein Maß der Übertragungsqualität betrachtet. Da die Sicherheit des PLS-Verfahrens und die Konfiguration des Sicherheitscodes auf dem bestmöglichen Signal-zu-Rausch Verhältnis, das ein Angreifer erlangen kann, beruht, müssen die S/N Werte für die unterschiedlichen Kommunikationsarten von, zwischen und zu den HAPs abgeschätzt werden.

Zunächst wird das SNR von IR-Laserstrahlen betrachtet. Die Intensität eines gaußförmigen Laserstrahls in Abhängigkeit von der Entfernung in Propagationsrichtung z und der radialen Ausdehnung r (senkrecht zur Propagationsrichtung) lässt sich durch Formel 1 (siehe oben) beschreiben. Das Signal zu Rauschverhältnis ist definitionsgemäß dem Quotienten aus der Signalintensität (Formel 1) und der Rauschintensität, also

$$\mathrm{SNR} = \mathrm{P_{Laser}} / \mathrm{P_{Rauschen}}$$

Die Rauschleistung wird dabei als $P_{Rauschen} = B * k * T_{sys}$ beschrieben, wobei B die Bandbreite des Signals [$s^{-1}$], k die Boltzmann Konstante [$1{,}38064852 \times 10^{-23}\ m^2\ kg\ s^{-2}\ K^{-1}$] und $T_{sys}$ die Systemtemperatur beschreibt. $P_{Rauschen}$ hat somit die korrekte Einheit [J/s = W]. Der finale Ausdruck des Signal-zu-Rauschverhältnisses eines gaußförmigen Laserstrahls ist somit:

$$\mathrm{SNR} = \mathrm{P_{Laser}} / \mathrm{P_{Rauschen}} = \int dr \quad I_0 \left(\frac{w_0}{w(z)}\right)^2 \mathrm{e}^{-\frac{2r^2}{w(z)^2}} \quad / \, \mathrm{BkT_{sys}}$$

Die folgenden physikalischen Größen haben demnach einen Einfluss auf das SNR eines Laserstrahls:

| Physikalische Größe | Beschreibung |
|---|---|
| $I_0$ | Intensität bzw. Leistung des Laserstrahls |
| $w_0$ | Strahlbreite des Transmitters |
| z | Abstand des Detektors von der Quelle |
| k | Boltzmann Konstante<br>k=1,38064852 × 10-23 $m^2$ kg $s^{-2}$ $K^{-1}$ |
| $T_{sys}$ | Effektive Temperatur des Gesamt-systems, d.h. $kT_{sys}$ beschreibt die thermische Energie des Senders, der Transmissionsstrecke und des Empfängers. |
| B | Bandbreite des Signals |

Entscheidend für die Systemsicherheit ist das Verhältnis der Signal-zu-Rauschabstände von angreifender Antenne/Detektor gegenüber der rechtmäßigen Antenne /Detektor.

Ein Angreifer unterscheidet sich vom rechtmäßigen Empfänger durch die Empfangseigenschaften der Parabolantennen bzw. der Teleskope. Dazu berechnet man das Integral über die Intensitätskurve des Laserstrahls mit den Grenzen der Größe der jeweiligen Empfangsantennen. Das ist

$$U(z) = \frac{\int_0^{r_A} \frac{1}{\left(w(z)\right)^2} \exp\left(-2r^2 \big/ \left(w(z)\right)^2\right) dr}{\int_0^{r_{sat}} \frac{1}{\left(w(z_{Sat})\right)^2} \exp\left(-2r^2 \big/ \left(w(z_{Sat})\right)^2\right) dr}$$

$$= \left(\frac{w(z_{Sat})}{w(z)}\right)^2 \frac{\int_0^{r_A} \exp\left(-2r^2 \big/ \left(w(z)\right)^2\right) dr}{\int_0^{r_{Sat}} \exp\left(-2r^2 \big/ \left(w(z_{Sat})\right)^2\right) dr}$$

$$= \left(\frac{w(z_{Sat})}{w(z)}\right)^2 \frac{\frac{w(z)\sqrt{\pi}}{\sqrt{2}\ 2} \operatorname{erf}\left(\frac{\sqrt{2}\, r_A}{w(z)}\right)}{\frac{w(z_{Sat})\sqrt{\pi}}{\sqrt{2}\ 2} \operatorname{erf}\left(\frac{\sqrt{2}\, r_{Sat}}{w(z_{Sat})}\right)}$$

$$= \frac{w(z_{sat})}{w(z)} \frac{\operatorname{erf}\left(\frac{\sqrt{2}\, r_A}{w(z)}\right)}{\operatorname{erf}\left(\frac{\sqrt{2}\, r_{Sat}}{w(z_{Sat})}\right)}$$

Integral:

$$\int_0^{r_A} \exp\left(-2r^2 / (w(z))^2\right) dr, \quad u = \frac{\sqrt{2}\, r}{w(z)}, \quad \frac{du}{dr} = \frac{w(z)}{\sqrt{2}}$$

$$= \int_0^{\frac{\sqrt{2}\, r_A}{w(z)}} \exp(-u^2) \frac{w(z)}{\sqrt{2}} du$$

$$= \frac{w(z)\sqrt{\pi}}{\sqrt{2}\ 2} \frac{2}{\sqrt{\pi}} \int_0^{\frac{\sqrt{2}\, r_A}{w(z)}} \exp(-u^2)\, du$$

$$= \frac{w(z)\sqrt{\pi}}{\sqrt{2}\ 2} \operatorname{erf}\left(\frac{\sqrt{2}\, r_A}{w(z)}\right)$$

Der Ausdruck U(z) beschreibt somit den Anteil des originalen Laserstrahls, der von der Empfangsantenne endlichen Durchmessers aufgefangen werden kann. Dabei bezeichnet $r_A$ den Radius einer Angreifer Antenne und $r_{Sat}$ den Radius der Empfangsantenne an der HAP oder - in umgekehrter Richtung - an der Bodenstation.

Neben der Größe der Angreifer- und rechtmäßigen Empfangsantenne spielen für das SNR die Bandbreite des Signals und die effektive Systemtemperatur eine Rolle. Die effektive Systemtemperatur setzt sich zusammen aus der Temperatur des Senders, des Empfängers und der Übertragungsstrecke.

Da zur Verifikation der Systemsicherheit die Betrachtung des Quotienten des SNRs des Angreifers und dem SNR des rechtmäßigen Empfängers ausreicht, ergibt sich der folgende Ausdruck:

$$\text{SNR(Angreifer) / SNR(Empfänger)} = \text{U(z)}\ T_{sys}^{E} / T_{sys}^{A}$$

wobei das U(z) oben berechnet wurde. Die Systemtemperaturen beschreiben die Temperaturen des Angreifers (Index A) sowie des rechtmäßigen Empfängers (Index E). Die Bandbreite ist dabei identisch, so dass sich diese herauskürzt. Das Gesamtsystem kann somit mit einer PLS-Sicherheitskodierung geschützt werden, sofern U(z) $T_{sys}^{E} / T_{sys}^{A} < 1$ [Formel 2] ist.

Im Folgenden wird das SNR von MIMO THZ-Mobilfunk betrachtet. Das Signal-zu-Rausch Verhältnis wird in https://www.researchgate.net/publication/252502511_Large-Array_Signal_Processing_for_Deep-Space Applications/-link/540f2f4 10cf2f2b29a3dd678/download
für lineare Empfängerantennen (Arrays) berechnet. Bei vernachlässigbarer Interferenz des Nutzsignals mit einem Störsignals aus derselben Richtung (z.B. ein Jammer/Störer hinter der HAP) lässt sich der SNR eines Antennenarrays als

$$SNR = \frac{NE[|S(t)|^2]}{\sigma_n^2}$$

darstellen, wobei $E[|S(t)|^2]$ den zeitlich gemittelten Erwartungswert der empfangenen Intensität an einem Detektor, N die Anzahl der Empfangsantennen und $\sigma_n^2$ die Varianz des Gauss'schen Rauschen eines Empfängers beschreibt. Das SNR wächst also proportional mit der Anzahl der Empfangsantennen.

Im Falle eines starken Jammers, der in Signalrichtung stört (z.B. indem er sich vor oder hinter der HAP aufhält), wird jedoch nur ein von N unabhängiger SNR erzeugt

$$SNR = \frac{E[|S(t)|^2]}{\sigma_b^2}$$

wobei $\sigma_b^2$ die Varianz des Gauss'schen Rauschen des Jammers beschreibt. Der Vorteil des Antennenarrays, d.h. die Skalierung des SNRs mit N, verschwindet. Ein Jammer wäre z.B. ein anderes Objekt, z.B. ein Zeppelin, ein Wetterballon oder ein Spionagesatellit, der über sich über der HAP befindet und mit seinen Signalen die RF-Kommunikation von der HAP in ihr Versorgungsgebiet stört.

Die Rauschanteile beider Signale $\sigma_b^2$ bzw. $\sigma_n^2$ sind eine analoge Beschreibung des thermischen Rauschens, die bei den Laserstrahlen durch die effektive Systemtemperatur $T_{sys}$ ausgedrückt wurde. Die Temperaturen kürzen sich in den relevanten Szenarien heraus, so dass das Verhältnis der SNRs eines Angreifers zu den rechtmäßigen Empfängern unabhängig von den Rauschwerten ist.

Andere Antennengeometrien, z.B. kreisförmige oder rechteckige Antennen, lassen sich über entsprechende Korrekturfaktoren behandeln.

Das Verhältnis des SNR eines Angreifers zum SNR des gewollten Empfängers hängt demnach von dem Verhältnis der Anzahl der phasengekoppelten Antennen zwischen Angreifer und rechtmäßigem Empfänger ab, sofern kein interferierendes Signal (Jammer) gesendet wird.

$$\frac{SNR_A}{SNR_E} = \frac{N_A}{N_E}\frac{E[|S(t)|^2]_A}{E[|S(t)|^2]_E}$$

oder

$$\frac{SNR_A}{SNR_E} = \frac{N_A}{N_E}\frac{R_E^2}{R_A^2}C$$

da der Erwartungswert der Intensität mit dem Quadrat der Entfernung innerhalb des Raumwinkels abnimmt. C beschreibt einen Korrekturfaktor, falls das zentrale Maximum der Strahlungskeule die Dimension der Empfangsantenne übersteigt.

Im Folgenden werden Angriffsszenarien auf eine IR-Laser Kommunikationsstrecke betrachtet. Zunächst sei ein Angriffsszenario mit einer Drohne im Downlink (Abwärtsstrecke von der HAP in Richtung Boden) betrachtet. Das Angriffsszenario geht von einer Drohne aus, die in einer Höhe von 100m im Perimeter des Laserstrahl von der HAP zur Bodenstation bzw. umgekehrt aufhält. Dabei wird angenommen, dass die Drohne eine Parabolantenne von 5-10cm Durchmesser stabil tragen kann, ohne dabei aufzufallen. Der rechtmäßige Empfänger, die Bodenstation (z.B. ein Mobilfunk-Node-B oder ein Control Center) hat schätzungsweise eine Parabolantenne mit einem Durchmesser von bis zu 1m.

Aufgrund des identischen Senders, derselben Transmissionsstrecke zwischen Sender und Empfänger (ca. 15km) und derselben Temperatur bei beiden Empfängern (Drohne & Bodenstation) kürzt sich die Temperatur aus dem Verhältnis der SNR-Werte heraus.

Die Aufweitung des Strahls ist mit w(z)=0,11m für die Drohne und die Bodenstation identisch - womit die Antennengröße von 0,3m für die Bodenstation (3 Sigma des Gauß-Strahls) ausreichen sollte.

Für die Diskussion der Sicherheit ergibt sich

$$\text{SNR(Angreifer)} / \text{SNR(Empfänger)} = U(z)\, T_{sys}^{E} / T_{sys}^{A} = U(z) <!\ 1$$

Es ergeben sich für 100m Drohnenflughöhe und 15km HAP-Flughöhe die folgenden Werte für U(z):

| Apertur Sender [m] | Apertur Angreifer [m] | Apertur Empfänger [m] | U(z) |
|---|---|---|---|
| 1m | 0,1m | 1m | <0,17 |
| 1m | 0,05m | 1m | <0,08 |
| 0,25m | 0,1m | 1m | <0,60 |
| 0,25m | 0,05m | 1m | <0,30 |
| 0,1m | 0,1m | 1m | > 1 |
| 0,1m | 0,05m | 1m | <0,80 |
| 1m | 0,1m | 0,3m | <0,36 |
| 1m | 0,05m | 0,3m | <0,18 |

(fortgesetzt)

| Apertur Sender [m] | Apertur Angreifer [m] | Apertur Empfänger [m] | U(z) |
|---|---|---|---|
| 0,25m | 0,1m | 0,3m | <0,60 |
| 0,25m | 0,05m | 0,3m | <0,30 |
| 0,1m | 0,1m | 0,3m | >1 |
| 0,1m | 0,05m | 0,3m | <0,80 |

Es wird ersichtlich, dass sich die Sicherheit einer IR-Laser Downlink Verbindung verbessert, je größer die Apertur des Senders wird. Es wird in diesem HAP-Ausführungsbeispiel daher die Verwendung von mindestens 25cm Laserapertur angeraten, besser eine Apertur von 1m. In den meisten der analysierten Fälle ist das System sicher, da der Laserstrahl bei großer Apertur annähernd parallel verläuft und die Angreifer Antenne kleiner ist als die Antenne des legitimen Empfängers. Aus diesem Grund kann der Angreifer nur ein schlechteres Signal empfangen und somit ein geringeres SNR haben.

Ein weiteres Angriffsszenario ist ein Spionage-Ballon unterhalb der HAP. In diesem Szenario wird untersucht, wie nah sich ein Spion (Spionageballon, Spionageflugzeug) von unterhalb an eine HAP annähern müsste, um PLS-kodierte Nachrichten dekodieren zu können.

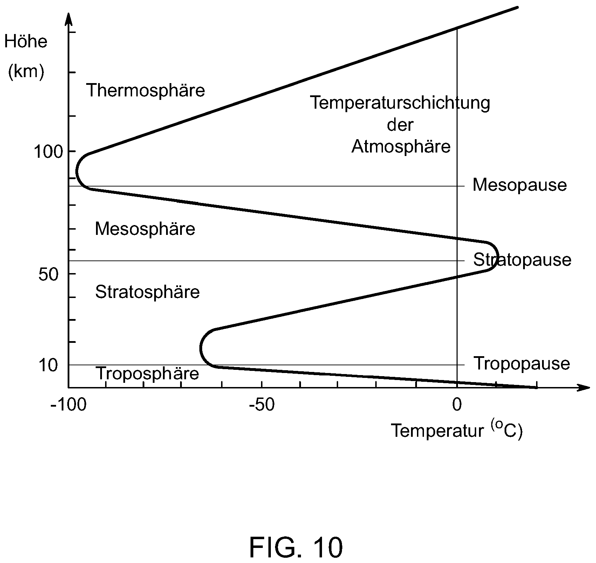

In diesem Fall muss $U(z)\ T_{sys}^{E} / T_{sys}^{A} < 1$ gelten. Die Temperaturen in einer Höhe von 10 - 20km sind ca. -65°C. Fig. 10 zeigt eine Darstellung eines Temperaturverlaufs in der Atmosphäre mit der Temperatur in Grad Celsius auf der Abszisse und der Höhe in km auf der Ordinate.

Somit hat der Angreifer einen minimalen Temperaturvorteil aufgrund der niedrigeren Empfängertemperatur von 213/278 = 0,8. Die Temperatur des Senders ist identisch.

Weitere Details finden sich hier, vgl. auch Fig. 10: http://www.wetterkursus.de/atm_aufbau.html#:~:text=10%2D15km%20Höhe%20nimmt%20die,aufgenommen%20und%20in%20Wärme%20umgewandelt.

Das Rauschen der Strecke wird vernachlässigt. Für eine Apertur des rechtmäßigen Empfängers von 1m erhält man

| Apertur Sender [m] | Apertur Angreifer/Attacker [m] | z [km] für U(z) * 0,8 <! 1 |
|---|---|---|
| 0,01 | 0,1 | 7,0 |
| 0,01 | 0,05 | 5,1 |
| 0,001 | 0,1 | 4,2 |
| 0,001 | 0,05 | 3,0 |

Diese Berechnung macht deutlich, dass sich ein Spion bei einer Sendeapertur von 1cm nicht näher als 7km, bzw. bei einer Sendeapertur von 1mm nicht näher als 4km der HAP von unterhalb nähern sollte.

Erdgebundene Objekte (Drohnen, Hubschrauber) werden nicht in Höhen > 10km vorstoßen können. Die zivile Luftfahrt erreicht Flughöhen bis 13km, daher wäre aus Sicht der Informationssicherheit eine Stationierung einer HAP in Höhen von > 17km sinnvoll. Da der Angreifer allerdings besondere Anforderungen hinsichtlich seiner Position unterliegt, d.h. er muss diese inkl. der Ausrichtung seiner Antenne mit einer Genauigkeit einiger Zentimeter stabil halten, ist von ein derartiger Annäherungsangriff praktisch auszuschließen.

Physical Layer Encoding schützt die digitale Kommunikation eines lasergestützten Kommunikationssystems im HAP Downlink vor terrestrischen Angreifern. Zusätzliche Schutzmaßnahmen sind daher nicht notwendig.

Nunmehr wir ein Angriffsszenario einer Drohne auf die HAP im Sidelink (Verbindung in seitlicher Richtung, z.B. zu einer anderen HAP) betrachtet. In diesem Angriffsszenario versucht sich ein Wetterballon/High Altitude Vehicle der HAP zu nähern und hält eine kleine Parabolantenne in den Kommunikationslaser, der verschiedene HAPs miteinander verbindet.

Anmerkung: In einer Höhe von 15-17km kommen nur Wetterballons, spezielle Flugzeuge (troposphärische Segler) als Angreifer in Frage. Drohnen oder Hubschrauber können in dieser Höhe nicht mehr fliegen. Der Vorfall eines chinesischen Wetterballons, der die Vereinigten Staaten von Amerika im Jahr 2022 überflog, bewies die Möglichkeiten einer erfolgreichen Luftraumüberwachung mit bestehender Technik, so dass derartige Angreifer ausgeschlossen werden können. Nichtsdestotrotz lassen sich die SNR im IR-lasergestützten Sidelink berechnen.

Die Größe der Parabolantennen ist analog dem Downlink-Beispiel zuvor. Beide Antennen detektieren dieselbe Hintergrundstrahlung. Der Abstand der HAPs entspricht dem Anstand zweier Metropolregionen. Beispielhaft untersuchen wir den Fall von 100km (für Deutschland) und 500km (für Frankreich) und 2000km (für Kanada). Die folgenden Tabellen stellt die minimal akzeptablen Abstände eines Angreifers für unterschiedliche HAP-Distanzen zusammen

Sendeapertur: 10cm, Angreiferapertur: 10cm, Empfangsapertur: 1m

| Distanz Sender / Empfänger [km] | Erlaubbarer Abstand Angreifer [km] |
|---|---|
| 100 (Deutschland) | 59 |
| 500 (Frankreich) | 170 |
| 2000 (Kanada) | 630 |

Sendeapertur: 25cm, Angreiferapertur: 10cm, Empfangsapertur: 1m

| Distanz Sender / Empfänger [km] | Erlaubbarer Abstand Angreifer [km] |
|---|---|
| 100 (Deutschland) | Immer sicher |
| 500 (Frankreich) | 160 |
| 2000 (Kanada) | 630 |

Sendeapertur: 50cm, Angreiferapertur: 10cm, Empfangsapertur: 1m

| Distanz Sender / Empfänger [km] | Erlaubbarer Abstand Angreifer [km] |
|---|---|
| 100 (Deutschland) | Immer sicher |
| 500 (Frankreich) | Immer sicher |
| 2000 (Kanada) | 194 |

Auch hier gilt: je grösser die Sendeapertur, desto sicherer das Verfahren. Aperturen um ca. 25cm wären wünschenswert und lassen sich ingenieurtechnisch robust realisieren.

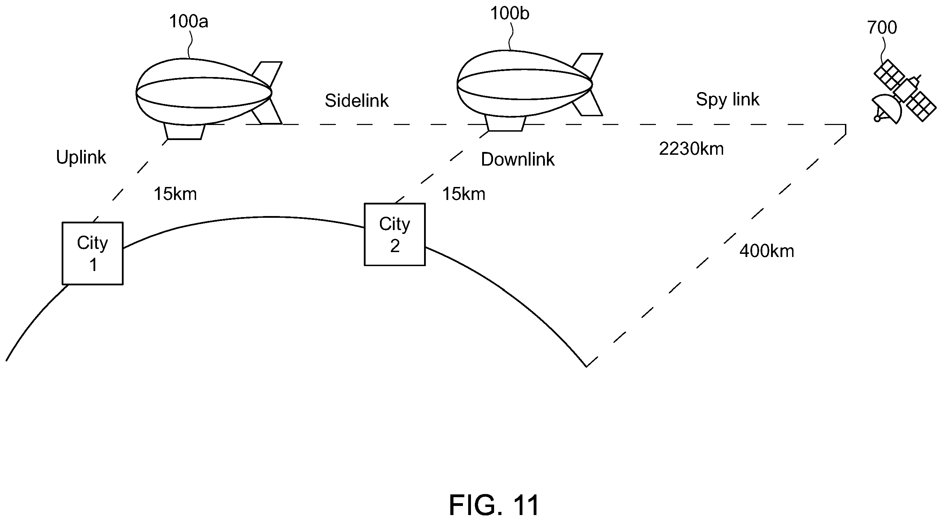

Insbesondere schützt PLS die Kommunikation zwischen zwei HAPs gegenüber einem Spionagesatelliten am Horizont, der versucht die gesendeten Signale aufzufangen. Aufgrund der enorm großen Freiraumdämpfung (Aufweitung des Laserstrahls bis zum Satelliten) des Satelliten bei einem Abstand von 2230km am Horizont hinter dem HAP-Empfänger hat dieser ein um Größenordnungen schlechteres SNR, so dass die PLS-Methode die Kommunikation erfolgreich schützt. Das Scenario wird in Fig. 11 dargestellt, die ein Szenario eines Abhörversuchs mit einem Spionagesatelliten zeigt. Ein Spionagesatellit 700 versucht die Signale, die von der Sender-HAP 100a aus die Empfänger HAP 100b passieren, aufzufangen.

Fazit: Physical Layer Encoding schützt die digitale Kommunikation eines lasergestützten HAP-Systems im Sidelink, sofern sichergestellt werden kann, dass kein Angreifer in die unmittelbare Nähe der sendenden HAP gelangt. Wird der Laserstrahl auf 25cm Sendeapertur aufgeweitet, so ist das System für Aufbauten in europäischen Ländergrößen sicher. Es sollten Flugverbotszonen an Orten der HAPs durchgesetzt werden. Generell gilt, dass größere Sendeaperturen eine größere Sicherheit versprechen. Sollte eine Annäherung dennoch gelingen, so wird auch nur die Kommunikation in eine Richtung angreifbar - während die Rückrichtung weiterhin geschützt ist.

Ein weiteres denkbares Angriffsszenario erfolgt mit einer Drohne im Uplink (Aufwärtsstrecke vom Boden in Richtung HAP). Die Größe der Parabolantennen (Sender, Angreifer, Empfänger) ist analog den Beispielen zuvor.

Der HAP-Empfänger hat einen Vorteil von einem Faktor 273/213 = 1,2 gegenüber dem Angreifer. Die Temperaturabhängigkeit der Strecke wird vernachlässigt. Während die Drohne einen Abstand von 100m zur Sendeeinrichtung hat, hat die HAP einen Abstand von ca. 15km.

Aufgrund der Strahlcharakteristik eines Gauß'schen Laserstrahls wird ersichtlich, dass der Uplink zu einer HAP sicherer wird, je größer die Apertur des Sendelasers ist. Dies liegt begründet in der geringeren Fläche der Angreifer Antenne im Verhältnis zur gesendeten Strahlbreite und der geringeren Strahl Aufweitung des Uplink Lasers, sofern die Apertur des Senders größer wird. Dargestellt wird dies in der folgenden Tabelle:

| Apertur Sender [m] | Apertur Angreifer [m] | z [km] für U(z) * 1,2 <! 1 |
|---|---|---|
| 0,01 | 0,1 | 57 (unsicher) |
| 0,01 | 0,05 | 57 (unsicher) |
| 0,1 | 0,1 | 1,3 (unsicher) |
| 0,1 | 0,05 | 0,91 |
| 1 | 0,1 | 0,2 |
| 1 | 0,05 | 0,1 |

Für eine Apertur des Uplink-Lasers von 1m ließe sich ein sicherer Uplink zu einer HAP erzeugen. Technisch ist die Realisierung eines derartigen Uplinks durch den Einsatz einer Newton Optik (Newton Teleskop) zur Strahlausweitung sehr einfach realisierbar.

Fazit: Physical Layer Encoding schützt die digitale Kommunikation eines lasergestützten Kommunikationssystems im Uplink zu einer HAP.

Indirekte Angriffe auf das lasergestützte Kommunikationssystem werden nicht zugelassen.

Nur ein Objekt im eng begrenzten Strahlengang des Laserstrahls ist in der Lage das durch PLS geschützte Kommunikationssystem anzugreifen. Die Leistung des Strahls ist außerhalb der Strahlkaustik von 3w(z) minimal und das Signal-zu-Rauschverhältnis nimmt rapide ab. Ein Angreifer muss also schon für längere Zeit im räumlich eng begrenzten Bereich der Laserstrahlung bleiben, damit Information spioniert werden können.

Sollte der Kommunikationslaser in höheren Moden arbeiten, i.e. $TEM_{xy}$, wobei x,y>0, so nimmt die transversale Ausdehnung des Laserstrahls zu. Die Sendeleistung verteilt sich somit auf einen größeren Raum (transversal). Die Signalstärke auf einer räumlich begrenzten Antenne wird somit geringer und der Signal-zu-Rauschabstand eines Angreifers wird schlechter. Die Verwendung von höheren Moden wäre somit der Abhörsicherheit zuträglich.

Streuung oder Reflexionen an der Atmosphäre spielen bei Infrarotlasern eine Rolle. Allerdings ist das SNR eines unrechtmäßigen Empfängers in diesem Falle so schlecht, dass PLS vor diesen Szenarien zuverlässig schützt. Dieselbe Argumentation gilt für optische Beugungseffekte sowie für Wetterphänomene wie Wolken, Regen oder Sturm.

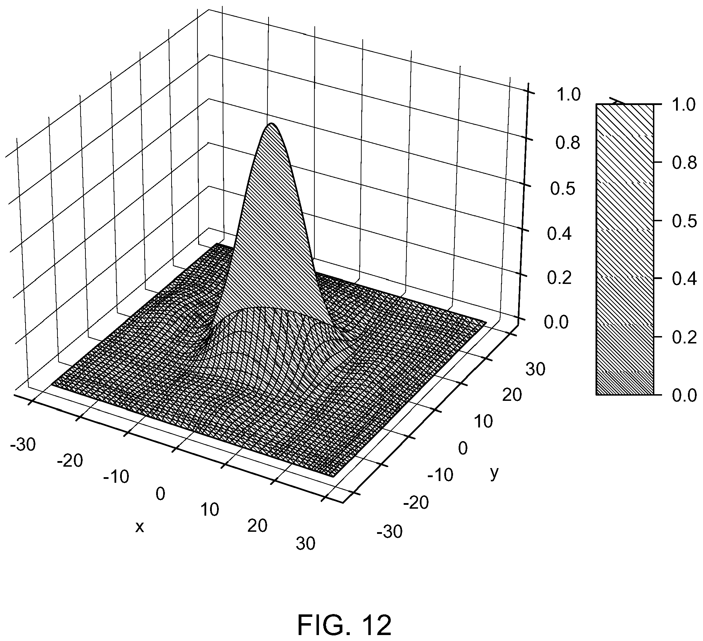

Im Folgenden werden Angriffsszenarien auf eine GHz MIMO Kommunikationsstrecke betrachtet. Zunächst folgt ein Angriffsszenario einer Drohne im Downlink. Es wird angenommen, dass die HAP mit einer quadratischen Antenne, die aus 32x32 Antennenelementen besteht, sendet. Sie erzeugt somit auf der Erdoberfläche eine Abdeckung mit einem Radius von 14,65m (FWHM (3dB Dämpfung)). Die HAP befindet sich dabei auf 15km Flughöhe. Annahme: Der legitime Empfänger und Angreifer haben dasselbe Empfängerrauschen. Fig. 12 zeigt eine normierte Beam-Intensität auf der Erdoberfläche bei 15km HAP-Höhe. In der Ebene werden die Koordinaten per x und y in m angegeben und nach oben ist die Strahlungsintensität dargestellt, deren Maximum auf eins normiert ist. Die Empfangsantenne am Boden hat eine Anzahl von $N_E$ Antennen. Ein terrestrischer Angreifer verwendet eine Empfangseinheit mit $N_A$ Antennen. Der Angreifer verwendet eine Drohne, die ca. 100m über der Empfangsantenne fliegt. Somit ist die Distanz vom Sender zum Angreifer bzw. zur Bodenantenne nahezu identisch. Das Verhältnis der SNR-Werte hängt daher nur von der Anzahl der korrelierten Empfangsantennen und der physikalischen Größe der Antennen ab.

Die minimale Größe einer linearen Antenne beträgt $N\lambda/2$, d.h. bei typischen 6G Spektren ergeben sich die folgenden Antennengrößen:

| Anzahl Antennen N | Frequenz [GHz] | Wellenlänge [m] | Länge des Arrays [m] |
|---|---|---|---|
| 16 | 5 | 0,06 | 0,480 |
| 64 | 5 | 0,06 | 1,920 |
| 16 | 25 | 0,012 | 0,096 |
| 64 | 25 | 0,012 | 0,384 |
| 16 | 70 | 0,0043 | 0,034 |
| 64 | 70 | 0,0043 | 0,137 |
| 1024 | 70 | 0,0043 | 2,194 |

Bei zweidimensionaler Antennenanordnung ergeben sich Größen von

| Anzahl Antennen | Frequenz [GHz] | Wellenlänge [mm] | Seitenlänge des quad. Arrays [mm] |
|---|---|---|---|
| 4x4 | 5 | 60 | 120 |
| 8x8 | 5 | 60 | 240 |
| 32x32 | 5 | 60 | 960 |
| 4x4 | 25 | 12 | 24 |
| 8x8 | 25 | 12 | 48 |
| 32x32 | 25 | 12 | 192 |
| 4x4 | 70 | 4,3 | 8,6 |
| 8x8 | 70 | 4,3 | 17,1 |
| 32x32 | 70 | 4,3 | 68,6 |

Bei quadratischer Antennenanordnung kann ein Angreifer bei einer Antennengröße von ca. 25cm 64 Antennen (5GHz), 1024 Antennen (25GHz) verbauen. Eine solche 8x8 Antenne bei 5GHz erscheint technisch realisierbar und mit Drohnen transportierbar - und soll in der weiteren Herleitung verwendet werden.

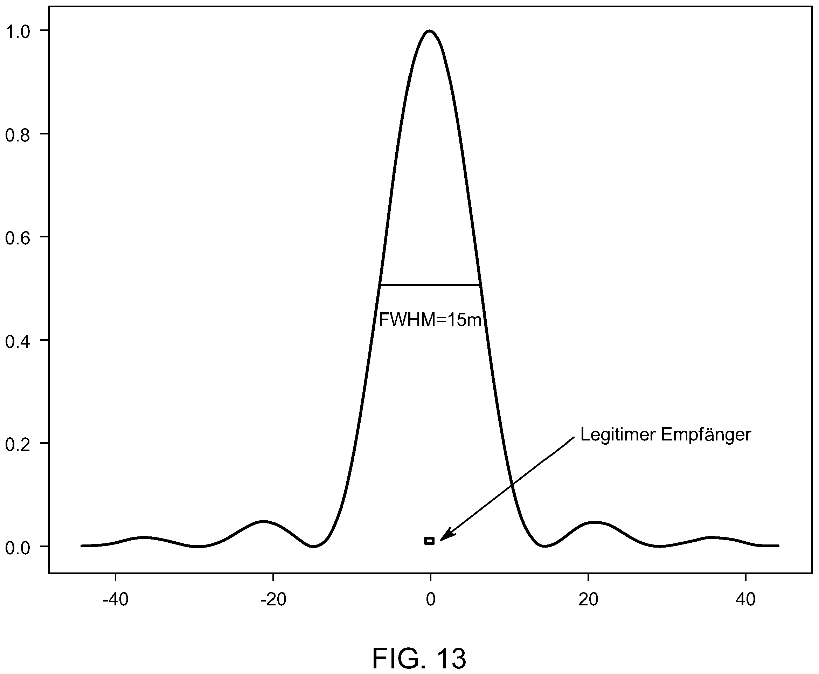

Höhere Frequenzen im D-Band, W-Band oder im THz Bereich müssen aufgrund ihrer geringen Reichweite (ca. 120m Reichweite im D-Band) für die HAP-Kommunikation nicht betrachtet werden. Die Fig. 13 zeigt Beamforming/Strahlformung (zentrales Maximum) eines 32x32 Antennen Senders (eindimensionaler Schnitt) mit normierter Intensität über dem Abstand in Metern (m). Fig. 13 zeigt die Intensitätsverteilung (eindimensionaler Schnitt) des quadratischen Sendeantennen-Arrays aus 32x32 Antennen in 15km Flughöhe auf der Erdoberfläche.

Gezeigt wird das zentrale Maximum der Antennenemission auf der Erdoberfläche. Eingezeichnet sind bei 5GHz Frequenz die Antennengröße einer 32x32-teiligen Empfangsantenne (rechtmäßiger Empfänger). Die empfangene Leistung ist proportional zur effektiven Fläche der Empfangsantenne.

Es folgt

$$\frac{SNR_A}{SNR_E} = \frac{\iint_{a_A} I(x,y,z_A)dxdy}{\iint_{a_E} I(x,y,z_E)dxdy}$$

wobei I(x,y,z) die 2-dimensionale Leistungsverteilung ist in einem Abstand von z von der Sendeantenne und $a_A$ ist die Fläche der Angreiferantenne und $a_E$ die Fläche der Antenne des legitimen Empfängers. Es ergibt sich

| Angreifer | 〖SNR〗 _A/ 〖SNR〗 _E |
|---|---|
| Drohne (4x4 Antennen, 0,12m Seitenl., 5GHz) | 0.016236 |
| Drohne (8x8 Antennen, 0,24m Seitenl., 5GHz) | 0.064938 |
| Terrestrisch (16x16 Antennen, 0,48m Seitenl., 10m Abstand, 5 GHz) | 0.037794 |
| Terrestrisch (32x32 Antennen, 0.96m Seitenl., 10m Abstand, 5 GHz) | 0.15295 |

Der rechtmäßige Empfänger hat bei Downlink-Angriffen, sofern sein Empfänger mehr Antennen als der Empfänger des Angreifers besitzt, stets ein besseres Signal-zu-Rauschverhältnis und sein Kanal lässt sich somit durch PLS

absichern. Der SNR-Vorteil ist bei einem GHz Kanal allerdings deutlich geringer als bei einem IR-Laser. Eine größere Anzahl von Sendeantennen (>1024) auf der HAP könnte diesen Nachteil jedoch ausgleichen.

Bei einem stationären terrestrischen Empfänger lässt sich ein Bereich von 30m-60m Radius um die Empfängerantenne sicherlich abriegeln bzw. im Zugang beschränken, so dass PLS die Kommunikationssicherheit gewährleisten kann.

Im mobilen Einsatzbereich ist der aktuelle Stand der Technik 4x4 MIMO, d.h. ein mobiles Endgerät unterstützt Multiple-Input mit 4 Empfangsantennen. Aufgrund der Bewegung des Empfängers (z.B. ein Verkehrsmittel, ein Handy, ein Sensor) ist davon auszugehen, dass sich ein Angreifer nicht ständig innerhalb des kritischen Radius aufhalten kann, um das Signal von der HAP mitzuschneiden. Kritisch sind allerdings Empfänger zu sehen, die an dem Verkehrsmittel, der Person oder dem Sensor unerlaubt befestigt werden und keine Verdeckung der Verbindung von der HAP haben, z.B. auf dem Autodach oder auf einem Kleidungsstück. Derartige Angriffe wären aber offensichtlich und leicht aufzudecken.

In den vorliegenden Simulationen wird eine effektive Antennenfläche verwendet, die der geometrischen Antennenfläche entspricht. In der Realität kann die effektive Antennenfläche kleiner sein als die geometrische Antennenfläche. Simulationen haben ergeben, dass die Resultate nur wenig von der absoluten effektiven Antennenfläche abhängen, sondern hauptsächlich von dem Verhältnis der Flächen von Angreifer und legitimen Empfänger.

Zunächst wir die Annäherung an den Sender betrachtet. Um zu ermitteln, wie groß der Sicherheitsabstand eines Flugobjektes unterhalb einer HAP sein müsste, um eine Dekodierung des Downlink-Signals zu verhindern, muss das Verhältnis der SNR-Werte des Angreifers und des rechtmäßigen Empfängers für verschiedene Abstände analysiert werden. Dabei ist wieder zu beachten, dass die Beam-Intensität von dem Abstand zum Sender abhängt.

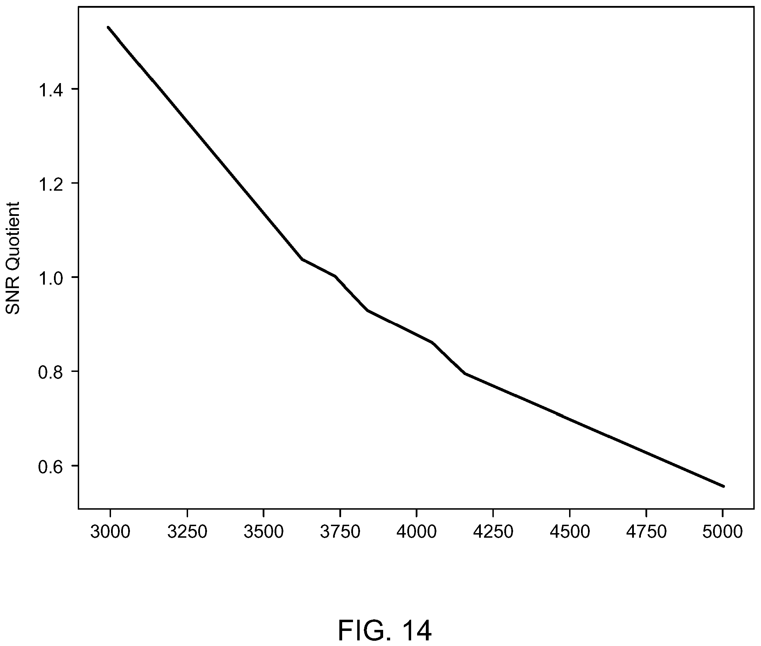

Fig. 14 zeigt eine Illustration zur minimalen Annäherung eines Angreifers mit 64 Antennen an einen HAP-Sender mit 1024 Antennen. Fig. 14 zeigt die Distanz zum Sender in m auf der Abszisse und den SNR-Quotienten auf der Ordinate. Die minimale Annäherung des Angreifers mit 64 Antennen an den HAP-Sender mit 1024 Antennen erfolgt derart, dass das SNR des Angreifers einen besseren SNR erhält als der rechtmäßige Empfänger und beträgt ungefähr 3700m (mit atmosphärischer Dämpfung von 0,01 dB/km ca. 3800m).

Die folgende Tabelle zeigt einige Szenarien eines Angreifers bezgl. der minimal erlaubbaren Annäherung an die HAP, sofern die HAP mit 1024 Antennen sendet. In Klammern ist die Distanz, die sich bei Berücksichtigung einer zusätzlichen atmosphärischen Dämpfung von 0,01 dB/km ergibt:

| Angreifer | Rechtmäßiger Empfänger | Minimale Annäherung [m] |
|---|---|---|
| Drohne (4 Antennen), 0,06 m Seitenlänge, 5GHz | Terrestrisch, 1024 Antennen | >950m (>950m) |
| Drohne (4 Antennen) | Terrestrisch, 256 Antennen | >1850m (>1900m) |
| Drohne (4 Antennen) | Terrestrisch, 4 Antennen | HAP Distanz |
| Drohne (16 Antennen), 0,12m Seitenlänge, 5 GHz | Terrestrisch, 1024 Antennen | >1900m (>1920m) |
| Drohne (16 Antennen) | Terrestrisch, 256 Antennen | >3750m (>3800m) |
| Drohne (16 Antennen) | Terrestrisch, 4 Antennen | >35000m (unbedeutend) |
| Drohne (32 Antennen) 0,17m Seitenlänge, 5 GHz | Terrestrisch, 1024 Antennen | >2650m (>2700m) |
| Drohne (32 Antennen) | Terrestrisch, 256 Antennen | >5350m (>5400m) |

Fazit:

Der Downlink eines RF Signals von einer HAP zu einer stationären Bodenstation bzw. zu einem mobilen Device/Gerät kann durch PLS gesichert werden. Allerdings sind die Vorteile einer RF-Lösung geringer als bei einer IR-Laser Lösung. Die Annäherung eines Spions an die HAP auf 4km oder weniger ist unrealistisch, weil die HAPs auf

Flughöhen von 17km gut überwachbar und nur von speziellen, großen Fluggeräten erreichbar wären.

Ein weiteres Angriffsszenario ist mit einer Drohne auf den Sidelink. Im Sidelink per RF-MIMO Antenne werden die Distanzen von 100km (Deutschland), 500km (Frankreich) und 2000km (Kanada) unterschieden. Dazu wird angenommen, dass sowohl die Sende- als auch die Empfangsantenne aus 1024 Antennen bestehen. Die Frequenz ist 5 GHz (aufgrund der benötigten Reichweite). Als Angreifer wird eine Drohne mit 16 bzw. 32 Antennen ausgewählt. Annahme: Gleiche Empfängerrauschtemperatur bei Empfänger und Angreifer. Die minimale Annäherung der Drohne an die Sender-HAP wird in der folgenden Tabelle dargestellt. Werte ohne Klammer sind berechnet mit dem Beam Modell. Werte in runder Klammer sind berechnet mit dem Beam Model und zusätzlich wurde eine atmosphärische Dämpfung von 0,01 dB/km berücksichtigt. Werte in eckiger Klammer sind mit dem vereinfachten Modell berechnet (siehe unten).

| Angreifer | HAP-Sender Antennen | HAP-Empfänger Antennen | HAP-Distanz | Minimale Annäherung [m] |
|---|---|---|---|---|
| Drohne (16 Antennen) 0,12m Seitenlänge, 5 GHz | 1024 | 1024 | 100km | >13km (>14,5km) [11,5km] |
| Drohne (32 Antennen) 0,17m Seitenlänge, 5 GHz | 1024 | 1024 | 100km | >18km (>20km) [16,1km] |
| Drohne (16 Antennen) 0,12m Seitenlänge, 5 GHz | 1024 | 1024 | 500km | >70km (>85km) [40km] |
| Drohne (32 Antennen) 0,17m Seitenlänge, 5 GHz | 1024 | 1024 | 500km | >100km(>120km) [53km] |
| Drohne (16 Antennen) | 1024 | 1024 | 2000km | >n.a. (n.a.) |
| 0,12m Seitenlänge, 5 GHz | | | | [26km] |
| Drohne (32 Antennen) 0,17m Seitenlänge, 5 GHz | 1024 | 1024 | 2000km | >250km [37km] |

Eine Drohne sollte in Deutschland nicht näher als 20km an den HAP-Sender aufschließen, so dass die Datenübertragung im Sidelink sicher ist.

Da die Distanzen in diesem Szenario groß sind (>100km) kann die Berechnung vereinfacht werden. Der Abdeckungsradius (FWHM) in 100km Abstand ist selbst bei 32x32 Antennen 97 m. Damit kann die Integration über I(x,y,z) durch eine einfache Multiplikation ersetzt werden. Wenn Angreifer und Empfänger im Maximum sind, muss nur die unterschiedliche Antennengröße und der unterschiedliche Abstand berücksichtigt werden. Es ergibt sich:

$$\frac{SNR_A}{SNR_E} = \frac{\iint_{a_A} I(x,y,z_A)dxdy}{\iint_{a_E} I(x,y,z_E)dxdy} = \frac{a_A z_E^2 A(z_A)}{a_E z_A^2 A(z_E)} = \frac{N_A z_E^2}{N_E z_A^2} A^{z_E - z_A}$$

Wobei A(z) die atmosphärische Dämpfung für eine Distanz von z bezeichnet und A den Dämpfungsfaktor pro m.

Fazit:

Beim Sidelink eines HAP-Netzwerks sollten auf IR-Laser mit großer Apertur verwendet werden, da diese eine sichere Kommunikation, unabhängig von einer Annäherung eines realistischen Angreifers, ermöglichen.

Das nächste betrachtete Angriffsszenario erfolgt mit einer Drohne im Uplink. Eine Drohne im Uplink einer Bodenstation bzw. eines mobilen Endgerätes kann ein PLS-kodiertes Signal dekodieren. Die folgende Tabelle zeigt einige berechnete Szenarien $\frac{SNR_A}{SNR_E} = \frac{N_A}{N_E}\frac{R_E^2}{R_A^2}$, wobei der Korrekturfaktor vernachlässigt wurde. Der Angreifer befindet sich in 100m Höhe.

Achtung: Im Uplink könnten die Empfängerrauschtemperaturen von Empfänger und Angreifer unterschiedlich sein.

| Angreifer | Sender Antennen | HAP-Empfänger Antennen | HAP Distanz | 〖SNR〗_A / 〖SNR〗_E |
|---|---|---|---|---|
| Drohne (16 Antennen), 5 GHz | 1024 | 1024 | 15km | 340 |
| Drohne (32 Antennen), 5 GHz | 1024 | 1024 | 15km | 679 |

Ein analoges Verhalten ergibt sich für den RF-Uplink von einer HAP zu einem Satelliten. Ein Angreifer, der das Signal ca. 100m oberhalb der HAP abhört, wird es dekodieren können. Es gilt dieselbe Rechnung wie beim Uplink von der Erde. Aus den Rechnungen und Simulationen zum RF-Sidelink lassen sich die minimal erlaubbaren Abstände eines Angreifers zum HAP Uplink Sender > 18km abschätzen.

Fazit: PLS kann auch im Falle von GHz Frequenzen als Träger den Uplink von einer Bodenstation oder einem mobilen Endgerät zu einer HAP gegenüber einem Drohnenangriff nicht schützen. Ebenso wenig kann PLS den RF-Uplink von einer HAP zu einem Satellitensystem schützen, obwohl die technischen Fähigkeiten des Fluggerätes eines Angreifers deutlich ausgereifter sein müssten als bei einer konventionellen Drohne. Der PLS gesicherte Uplink von einer Bodenstation zu einer HAP sowie von einer HAP zu einem Satelliten sollte mit einem IR-Laser großer Apertur erfolgen.

Die SNR-Berechnungen lassen sich wie folgt zusammenfassen:
Es wird geschlussfolgert, dass hinsichtlich der PLS-Kommunikationssicherheit die folgenden Technologien für die Kommunikation einer HAP gewählt werden sollten:

1. HAP - Satellitenkommunikation: IR-Laser.
2. HAP - stationäre Bodenstation: IR-Laser.
3. HAP - HAP: IR-Laser.
4. HAP - Boden und Luftnavigationssysteme, z.B. Drohnen oder Autosteuerung aus dem HAP-Netzwerk: RF ("Radio Frequency")
5. HAP - mobile Endgeräte, erdgebundene Empfänger: RF

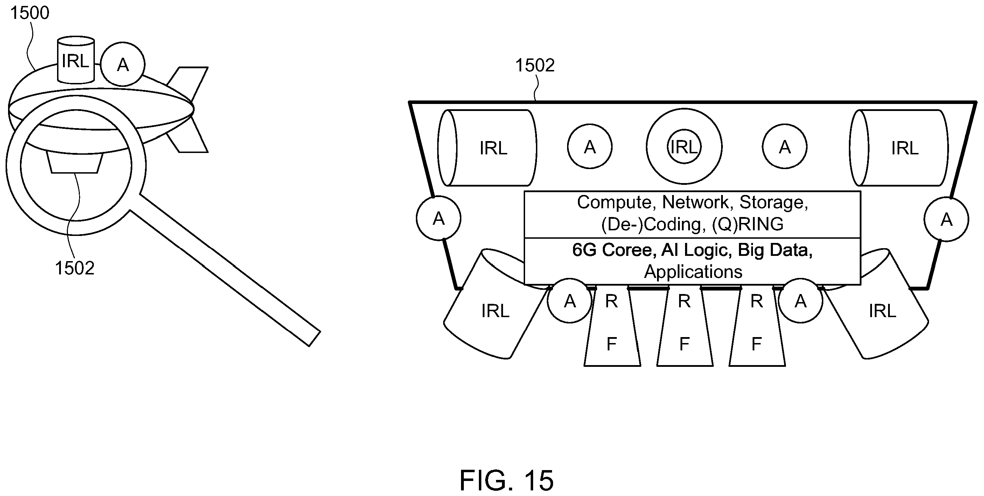

Im Folgenden wird der Aufbau einiger HAPs beschrieben. Fig. 15 zeigt ein Ausführungsbeispiel mit einem Zeppelin 1500 als HAP, der ein Ausführungsbeispiel der oben beschriebenen Vorrichtung 10 mit einer Funkkommunikationseinrichtung (RF, A) und einer Laserkommunikationseinrichtung (IRL) trägt. Die Fig. 15 zeigt links den Zeppelin 1500 als Ganzes und rechts eine Vergrößerung der unten am Zeppelin angebrachten Gondel mit IR-Lasereinheiten (IRL), Funkeinheiten mit Antennen (A) und Antennenfeldern. Im Innern der Gondel befinden sich verschiedene Signalverarbeitungskomponenten, die die Kommunikation mit Boden, anderen HAPs und Satelliten per Laser und/oder Funk ermöglichen.

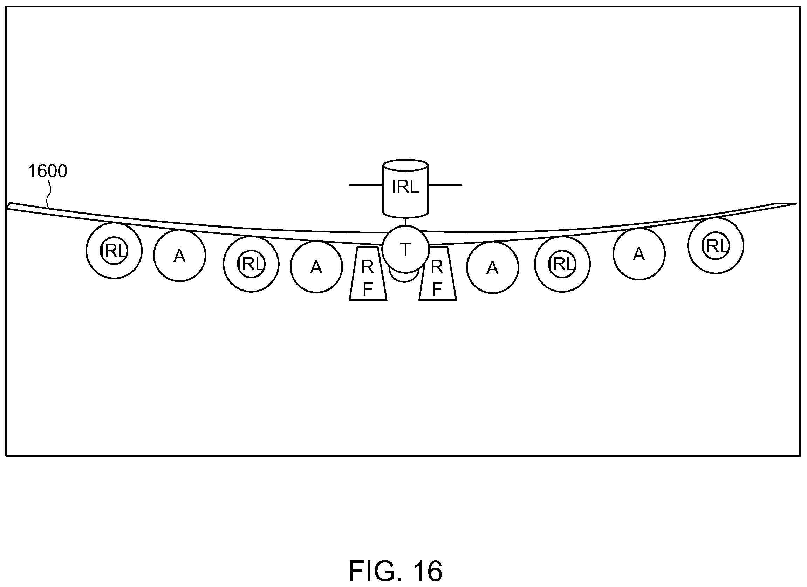

Fig. 16 zeigt ein Ausführungsbeispiel mit einem stratosphärischen Gleiter 1600 als HAP, an den die gleichen Komponenten angebracht sind, wie an den Zeppelin 1500 in der Fig. 15. Die Signalverarbeitungskomponenten sind bei dem Gleiter 1600 zentral in der Komponente T zusammengefasst. Die Fign 15 und 16 zeigen dabei mögliche Aufbauten einer HAP im Ausführungsbeispiel eines Zeppelins bzw. eines atmosphärischen Gleiters.

Bei dem Zeppelin 1500 mit HAP sind die Kommunikationseinrichtungen als Nutzlast eingezeichnet. Die Nutzlast besteht aus IR-Lasern (IRL) zur Kommunikation mit anderen HAPs, Satelliten und stationären Bodenstationen. Weiterhin befinden sich ein- oder zweidimensionale RF-Antennenarrays (RF) an der Unterseite zur Kommunikation mit mobilen Endgeräten (Drohnen, Fahrzeuge, mobile Endgeräte). Antennen (A) dienen dem Empfang von Nachrichten. In der HAP befindet sich eine Cloud Infrastruktur (Compute/Rechner, Network/Netzwerk, Storage/Speicher, Kodierung-Dekodierung/Coding-Decoding ) inkl. einer Quelle von Zufallszahlen (Q)-RNG. Zum Bereitstellen (Enabling) des Mobilfunks umfasst die HAP zudem ein 6G Core, Data Processing (AI (Artificial Intelligence/künstliche Intelligenz), Big Data (Massendaten)) und Applikationslogik (Steuerung und Navigation von Drohnen und Fahrzeugen, Mobilfunkservices).

Der stratosphärische Gleiter 1600 umfasst ebenfalls die HAP, bei der die Kommunikationseinrichtungen als Nutzlast eingezeichnet sind. Die Nutzlast besteht aus IR-Lasern (IRL) zur Kommunikation mit anderen HAPs, Satelliten und stationären Bodenstationen. Weiterhin befinden sich ein- oder zweidimensionale RF-Antennenarrays an der Unterseite zur Kommunikation mit mobilen Endgeräten (Drohnen, Fahrzeuge, mobile Endgeräte). Separate Parabol- bzw. RF-Empfangsantennen (A) dienen dem Empfang von Nachrichten. In der HAP, Signalverarbeitungskomponenten gekennzeichnet mit "T", befindet sich eine Cloud Infrastruktur (Compute, Network, Storage) inkl. einer Quelle von Zufallszahlen (Q)-RNG. Zum Bereitstellen (Enabling) des Mobilfunks zu dem ein 6G Core, Data Processing (AI, Big Data) und Applikationslogik (Steuerung und Navigation von Drohnen und Fahrzeugen, Mobilfunkservices).

Beide Ausführungsbeispiele tragen eine Basisinfrastruktur zum Ermöglichen von Mobilfunk-, Cloud-ICT- und Applikationsdiensten. Besonders hervorgehoben sind die RF-Antennen, die (schwenkbar) zum Boden geneigt sind. Die IR-Laser (IRL) werden als Teleskope dargestellt, die einen Laserstrahl breiter Apertur erzeugen und zur Kommunikation mit Satelliten, anderen HAPs bzw. Bodenstationen verwendet werden. Die Teleskope, d.h. Newton, Schmitt-Casegrain oder Maksutov Optiken, befinden sich auf regelbaren Tragbügeln (Gimbel), um Bewegungen der HAP auszugleichen. Sie sind meridional und azimutal schwenkbar, um verschiedene Kommunikationspartner ansteuern zu können. Die IRL-Systeme können zudem als Empfänger bzw. Empfangsantennen dienen, alternativ können aber auch separate Empfangsantennen (A), z.B. Parabolantennen oder RF-Antennenarrays, verwendet werden.

Die für die Physical Layer Security (PLS) notwendigen Kodierer und Dekodierer befinden sich in dem Bereich der Cloud Infrastruktur. Die Zufallszahlenquelle (QRNG) wird zur Generierung und Einfügung von bitweisem Rauschen in den Kommunikationskanal eingesetzt. Der QRNG kann weiterhin dazu verwendet werden, um den für das PLS-Verfahren notwendigen Seed (Zufallswert) auf einem klassischen Kanal a priori zu verteilen (Hinweis: der Seed muss nicht geheim sein). Der Seed wird in der Storage Einheit der Cloud Infrastruktur sicher verwahrt und dem Kodierer/Dekodierer zugänglich gemacht. Die Compute-Einheiten der Cloud Infrastruktur werden zur performanten Kodierung/Dekodierung der Kommunikationsdaten verwendet.

Die HAP bettet sich in eine 6G Netzwerkarchitektur ein, weshalb ein 6G Core mitgeführt wird. Der 6G Core bedient sich dabei der Cloud Infrastruktur zur Realisierung von 6G Compute, Storage und Netzwerk. Weiterhin werden Applikationslogiken, mit und ohne AI-Komponenten ermöglicht. Typische Applikationen sind die Steuerung von Drohnenverkehren in der Luft (Personen und Warenlogistik) sowie die Steuerung erdgebundener (autonom fahrender) Fahrzeugströme.

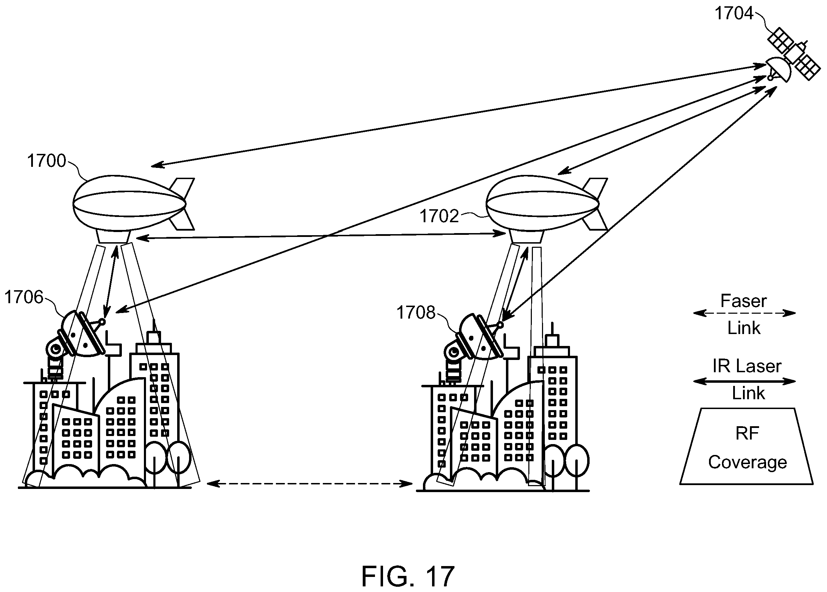

Zumindest manche Ausführungsbeispiel können semantisch sichere NT (Non Terrestrial) Netzwerke bereitstellen. Fig. 17 zeigt ein Ausführungsbeispiel eines non-terrestrischen Netzwerks. Zwei Zeppeline 1700, 1702 tragen je eine HAP, die die Kommunikation mit einem Satelliten 1704 und Bodenstationen 1706, 1708 ermöglicht. Das non-terrestrische Netzwerk entspricht der 6G NTN-Architektur. Über einer Stadt befindet sich ein Zeppelin 1700, 1702 als HAP. Die HAP versorgt einzelne Verbraucher in der Stadt mit Hilfe von PLS-gesicherten RF-Strahlungskeulen. Weiterhin existieren PLS-gesicherte IR-Laserlinks zwischen HAPs 1700, 1702, zwischen HAPs 1700, 1702 und stationären Bodenstationen 1706, 1708 und zwischen HAPs 1700, 1702 und Satelliten 1704.

Fig. 17 zeigt eine 6G NTN-Architektur bestehend aus einer terrestrischen Netzwerkebene, d.h. faseroptische Netzwerke, die Metropolregionen miteinander verbinden, aus einer HAP-Ebene und einer Satellitenebene. Die Links zwischen den Ebenen und innerhalb der HAP bzw. der Satellitenebene lassen sich über PLS gesicherte IR-Laser Links mit aufgeweiteter Senderapertur realisieren. Zudem versorgen die HAPs die darunterliegende Metropolregion mit PLS-gesicherten 6G MIMO-Mobilfunk.

Verbindungsaufbau:

Um eine semantisch sichere Ende-zu-Ende Verbindung zu ermöglichen, müssen die Einstellungen des Netzwerkcodes/Sicherheitscodes (Vorschrift zum Einfügen der zusätzlichen Rauschanteile auf der physikalischen Schicht) so gewählt werden, dass der rechtmäßige Empfänger stets ein besseres SNR aufweist als ein möglicher Angreifer. Dazu wird zumindest in einigen Ausführungsbeispielen das folgende Protokoll ausgeführt:

1. Messung des SNRs für jeden potenziellen Empfänger. Der Empfänger misst und übermittelt den SNR (Übertragungsqualität) seiner Verbindung mit dem Sender an das Kontrollsystem des Senders.
2. Ermittlung der Parameter für den Sicherheitscode. Abhängig von den Parametern der Kommunikationsverbindung wird ein PLS-Code (Vorschrift zum Einfügen der zusätzlichen Rauschanteile auf der physikalischen Schicht) festgelegt, der das unerlaubte Abhören der Kommunikation bis zu einem festgelegten Grenz-SNR verhindert. Der Grenz-SNR ist ein zuvor festgelegter Parameter pro Systemverbindung. Er wurde aufgrund der im Theorieteil durchgeführten Berechnungen festgelegt. Zum Beispiel lässt sich der Code so einstellen, dass immer gegenüber einem terrestrischen Drohnenangriff mit einer bestimmten maximalen Antennengröße verteidigt werden kann.
3. Anwendung des Sicherheitscodes. Die PLS-Kodierung wird auf die gesendeten Kommunikationsdaten vor der Modulation auf den Träger angewendet. Die jeweiligen Kommunikationseinrichtungen fügen nach Vorschrift des Sicherheitscodes auf der physikalischen Schicht die zusätzlichen Rauschanteile ein.
4. Ausnutzung eines vorverteilten Seeds. Jeder Kommunikationspartner des PLS-Systems benötigt einen vorverteilten Seed, d.h. einen Satz gemeinsam bekannter Zufallszahlen. Der Seed kann über ein Zufallszahlenverteilverfahren vorverteilt werden oder es können Eigenschaften des physikalischen Links verwendet werden, um gemeinsamen Zufall aus dem Kanalrauschen zu destillieren.
5. Anwendung des Sicherheitscodes zur Dekodierung. Der Empfänger dekodiert den Sicherheitscode mit Hilfe des vorverteilten Seeds. Die jeweilige Kommunikationseinrichtung entfernt demnach die zusätzlich eingefügten Rauschanteile auf der physikalischen Schicht.

Durch das Einfügen von zusätzlichem Rauschen wird der Durchsatz der Nutzdaten reduziert. Daher sollte immer so wenig Rauschen wie möglich zugefügt werden.

Sollte der PLS-Code die nutzbare Datenmenge zu sehr reduzieren, so lässt sich das Verfahren zumindest auf die Übermittlung von kryptographischen Schlüsseln anwenden. Kryptographische Schlüssel haben typischerweise eine Länge von < 1 kBit. Insofern können kryptografische Schlüssel in den Nachrichten ausgetauscht werden. In weiteren Ausführungsbeispielen können die ein oder mehreren Signalverarbeitungskomponenten ausgebildet sein, um weitere Zufallszahlen zu generieren und um auf Basis der weiteren Zufallszahlen kryptografische Schlüssel zu bestimmen. Darüber hinaus können die ein oder mehreren Signalverarbeitungskomponenten auch ausgebildet sein, um die kryptographischen Schlüssel über das Laser-Sicherheitsmodul und/oder das Funk-Sicherheitsmodul für die Übertragung auf der physikalischen Schicht zu sichern und an ein oder mehrere weitere Sendeempfänger zu übertragen.

Das in EP24174614 beschriebene Verfahren zum PLS-gesicherten Schlüsselaustausch lässt sich ebenfalls auf die Kommunikation zwischen HAP und Bodenstation, HAP und HAP, sowie zwischen HAP und Satellit anwenden. Bei genügend weiter Sendeapertur ist das Verfahren bi-direktional sicher. Die ausgetauschten Schlüssel können dann dazu verwendet werden, die Datenverkehre, wie in EP23196965 beschrieben, zu sichern: zuerst über eine quantensichere symmetrische Verschlüsselung unter Anwendung des zuvor ausgetauschten kryptographischen Schlüssels und danach (zusätzlich) über die Anwendung einer PLS-Kodierung. Insofern können das Laser-Sicherheitsmodul 14 und/oder das Funk-Sicherheitsmodul 18 der Vorrichtung 10 ferner ausgebildet sein, um die Kommunikation zusätzlich über einen post-quantum-kryptografischen Verschlüsselungsalgorithmus zu verschlüsseln. Auf der Seite der Bodenstation kann in gleicher Weise das Laser-Sicherheitsmodul 24 ferner ausgebildet sein, um die Kommunikation zusätzlich über einen post-quantum-kryptografischen Verschlüsselungsalgorithmus zu verschlüsseln.

Quantensichere Verschlüsselung, auch bekannt als post-quantum Verschlüsselung, bezieht sich auf kryptografische Algorithmen, die gegen Angriffe durch Quantencomputer resistent sind. Diese Art der Verschlüsselung ist notwendig, weil Quantencomputer bestimmte mathematische Probleme, auf denen die derzeitige klassische Kryptographie basiert, wesentlich schneller lösen können. Aktuelle Verschlüsselungsmethoden wie RSA (Rivest-Shamir-Adleman) und ECC (Elliptic Curve Cryptography) basieren auf mathematischen Problemen wie der Faktorisierung großer Zahlen und der Berechnung diskreter Logarithmen. Diese Probleme sind für klassische Computer schwer zu lösen, was die Sicherheit der Verschlüsselung gewährleistet. Mit Algorithmen wie Shors Algorithmus können Quantencomputer diese Probleme jedoch effizient lösen, was bedeutet, dass sie die derzeitigen Verschlüsselungsmethoden brechen könnten. Quantensichere Algorithmen basieren auf mathematischen Problemen, die auch für Quantencomputer schwer zu lösen sind. Beispiele hierfür sind: Gitterbasierte Kryptographie (z.B. Learning with Errors - LWE), Code-basierte Kryptographie (z.B. McEliece-Kryptosystem), Hash-basierte Signaturen (z.B. Lamport-Signaturen), Multivariat-polynomiale Kryptographie, Isogenie-basierte Kryptographie, etc. Die Sicherheitsstufe dieser Algorithmen wird so bewertet, dass sie auch gegenüber einem zukünftigen, leistungsfähigen Quantencomputer standhalten können.

Organisationen wie das National Institute of Standards and Technology (NIST) arbeiten an der Standardisierung quantensicherer Algorithmen, um deren breite Anwendung in der Praxis zu fördern. Beispiele für quantensichere Verschlüsselungsalgorithmen, die in Ausführungsbeispielen zum Einsatz kommen können sind Lattice-based Cryptography, Learning with Errors (LWE) und Ring-Learning with Errors (Ring-LWE), Code-based Cryptography, z.B. das McEliece-Kryptosystem verwendet lineare Fehlerkorrekturcodes und gilt als robust gegenüber Quantenangriffen. Ein weiteres Beispiel sind Hash-based Signatures, beispielsweise Lamport-Signaturen und deren Varianten sind einfache, aber sichere Methoden zur Erstellung digitaler Signaturen, die auch gegen Quantenangriffe sicher sind.

In weiteren Ausführungsbeispielen der Vorrichtung 10 können deren ein oder mehrere Signalverarbeitungskomponenten, ausgebildet sein, um eine über die Funkkommunikationseinrichtung 16 empfangene Nachricht von dem zweiten weiteren Sendeempfänger 300 über die Laserkommunikationseinrichtung 12 an den ersten weiteren Sendeempfänger 200 weiterzuleiten, und/oder um eine über die Laserkommunikationseinrichtung 12 empfangene Nachricht von dem ersten weiteren Sendeempfänger 200 über die Funkkommunikationseinrichtung 16 an den zweiten weiteren Sendeempfänger 300 weiterzuleiten. Insofern kann die Vorrichtung 10 für die HAP als Relaisstation zur Weiterleitung bzw. Vermittlung von Nachriten fungieren. Dabei können die ein oder mehreren Signalverarbeitungskomponenten ausgebildet sind, um in der Nachricht über das Laser-Sicherheitsmodul und das Funk-Sicherheitsmodul vor dem Weiterleiten vorherige zusätzliche Rauschanteile zu entfernen und neue zusätzliche Rauschanteile einzufügen. Dies entspricht einer PLS-Dekodierung mit anschließender PLS-Rekodierung. Alternativ können die ein oder mehreren Signalverarbeitungskomponenten ausgebildet sein, um die Nachricht weiterzuleiten, ohne die zusätzlichen Rauschanteile in der Nachricht zu verändern. Dann wird die Nachricht weitergeleitet so wie sie empfangen wurde. Bei dieser PLS-Kodierung müssen die Verhältnisse auf allen Teilverbindungen berücksichtigt werden, damit die Verbindung sicher bleibt. Insofern muss sichergestellt werden, dass die PLS-Kodierung (Vorschrift zum Einfügen der Rauschanteile) an diejenige Teilstrecke angepasst wird, auf der der vermeintliche Abhörer den geringsten Qualitätsunterschied (SNR-Unterschied) zum legitimen Empfänger hat.

Insofern kann zumindest in manchen Ausführungsbeispielen eine Reduktion der Dekodierung/Neukodierung an den intermediären Knoten stattfinden. Das zuvor beschriebene Verfahren hat den Nachteil, dass die PLS-kodierten Daten

bei einer Netzwerkverbindung über mehrere Knoten (z.B. Bodenstation - HAP - HAP - Bodenstation) an den HAPs dekodiert werden und neu kodiert werden. Wird stattdessen der schlechteste Teilkanal ausgewertet (derjenige bei dem das SNR des Abhörers am nächsten beim SNR des legitimen Empfängers liegt) und der Security Code so angepasst, dass selbst der schlechteste Kanal geschützt wird, so kann die Dekodierung und Neukodierung an den HAP-Knoten eingespart werden. Dazu wird das zuvor dargestellte Protokoll erweitert.

1. Messung des SNRs für jeden potenziellen Empfänger entlang eines Kommunikationslinks. Jeder Empfänger misst und übermittelt den SNR seiner Verbindung mit dem jeweiligen Sender an das Kontrollsystem des ersten Senders (Bodenstation 1).
2. Ermittlung der Parameter für den Sicherheitscode. Das Kontrollsystem des Senders berechnet nun die Parameter des PLS-Sicherheitscodes basierend auf der schlechtesten Teilverbindung. Die Parameter des PLS-Codes werden also so eingestellt, dass die schlechteste Teilverbindung noch ausreichend geschützt werden kann. Dies bedeutet natürlich, dass entsprechend weniger Daten über gute Links gesendet werden können, stattdessen aber eine Ende-zu-Ende Sicherheit gewonnen wird, weil keine PLS-Dekodierung auf intermediären Netzwerkknoten mehr durchgeführt wird.
3. Anwendung des Sicherheitscodes. Die PLS-Kodierung wird auf die gesendeten Kommunikationsdaten vor der Modulation auf den Träger angewendet.
4. Ausnutzung eines vorverteilten Seeds. Jeder Ende-zu-Ende Kommunikationspartner des PLS-Systems benötigt einen vorverteilten Seed, d.h. einen Satz gemeinsam bekannter Zufallszahlen. Der Seed kann z.B. über ein Zufallszahlenverteilverfahren vorverteilt werden und bedarf keines besonderen Schutzes.
5. Anwendung des Sicherheitscodes zur Dekodierung. Nur der Empfänger dekodiert den Sicherheitscode mit Hilfe des vorverteilten Seeds. Die intermediären Netzwerkknoten leiten die Verkehre einfach weiter und arbeiten somit nur als Relaystation. Um dieses Verhalten zu gewährleisten, wird den Relaystationen z.B. der gemeinsame Seed vorenthalten.

Es ist zu beachten, dass jeder der intermediären Netzwerkknoten das Signal dekodieren könnte, da das SNR ausreichend und der verteilte Seed öffentlich ist.

Die erste Variante ließe sich mit dem Namen "Decode & Forward" beschreiben, während die zweite Variante "Amplify & Forward genannt werden kann. Amplify-and-Forward hat einige Vorteile:

- Einfacher Aufbau, da die Decodierung und Kodierung auf einer HAP oder einem Satelliten entfallen.
- Passive Elemente, z.B. Spiegel zur direkten Reflexion der IR-Laserstrahlen oder MIMO Keulen wären denkbar. In diesem Fall ließen sich sichere Verbindungen zwischen zwei Metropolregionen über eine PLS gesicherte IR-Laserstrecke generieren, die Ende-zu-Ende sicher wäre.
- Energieeinsparung durch Wegfall aktiver Komponenten.
- Wiederverwendung aktiver Kommunikationslinks ohne Anpassung (z.B. in einem laserbasierten Kommunikationsverfahren).
- Latenzgewinn durch Wegfall der Kodierungs-/Dekodierungsschritte.

In einem Verfahren, in dem der Seed geheim verteilt wird, lässt sich die Kommunikation auch an den intermediären Knoten schützen. In diesem Fall hätte jede Punkt-zu-Punkt Kommunikationsstrecke einen geheimen Seed, der zur Kodierung/Dekodierung verwendet wird. Ein Angreifer, der diesen Seed nicht hätte, könnte somit die Informationen auch nicht dekodieren. In diesem Falle bekäme die Seedgenerierung eine wichtige Rolle.

In einigen Ausführungsbeispielen kann eine Optimierung des Routings stattfinden. Da die IR-Laserverbindungen eine Bandbreite von bis zu 100 GB/Sekunde aufweisen können (siehe "Hydron Projekt" der ESA, "Wire in the sky"), bieten sich über eine NTN-Architektur mit IR-Laser Verbindungen eine Vielzahl von alternativen Netzwerkrouten zwischen zwei Endpunkten. Das Routing kann rein terrestrisch erfolgen. Alternativ können auch unterschiedliche Routen über den HAP-Layer oder den SAT-Layer gewählt. Auch lässt sich die große Geschwindigkeit der Satelliten um die Erde ausnutzen, um Daten z.B. mit dem Satelliten "huckepack" (und somit abhörsicher) um die Welt zu transportieren. (Anmerkung: "Huckepack" bei Satelliten bietet sich für kryptographische Schlüssel an, siehe EP 24174614)

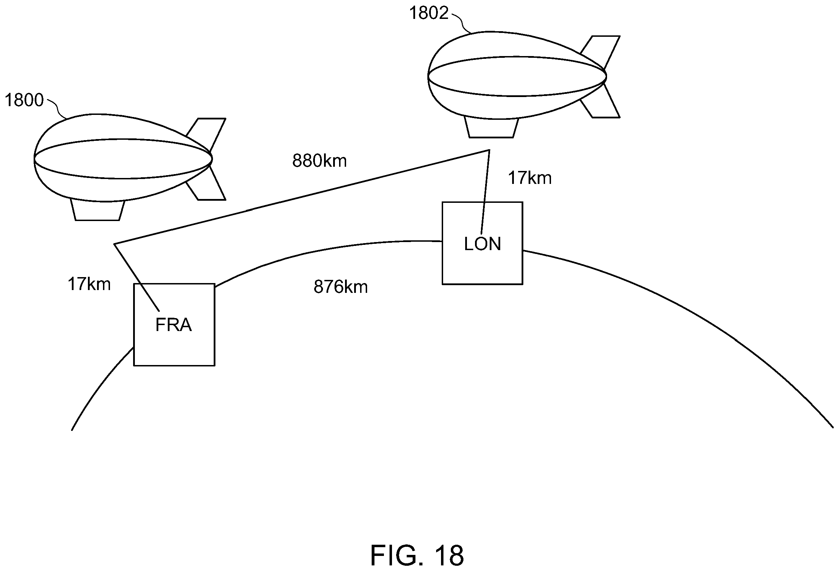

Im Folgenden wird ein PLS-gesichertes HAP-Netzwerk auf 15 - 18km Höhe über Metropolregionen betrachtet. Ausführungsbeispiele schaffen auch ein System zur Realisierung einer quantensicheren Niedriglatenzverbindung zwischen zwei Bodenstationen gemäß der vorliegenden Beschreibung und mit einer oder mehreren Höhenplattformen gemäß der vorliegenden Beschreibung als Relaisstrecke zwischen den zwei Bodenstationen. Die Fig. 18 zeigt ein Ausführungsbeispiel zweier Zeppelin-HAPs 1800, 1802 über Frankfurt (FRA) und London (LON). Es wird eine Niedriglatenzverbindungen zwischen den HAPs 1800, 1802 realisiert.

Mit Hilfe von HAPs lassen sich niedriglatente Wide Area Netzwerke erstellen. Als Beispiel soll eine Verbindung der Börsenplätze von Frankfurt und London geschaffen werden. Die Luftlinienentfernung auf dem Great Circle, auch als

Großkreisroute bekannt, zwischen Frankfurt am Main und London beträgt etwa 876 Kilometer. Der Great Circle repräsentiert den kürzesten Weg zwischen zwei Punkten auf der Oberfläche einer Kugel, was in der Luftfahrt oft als optimale Flugroute verwendet wird. Die Luftlinienentfernung zwischen zwei Punkten auf der Erde kann unter Verwendung der Haversine-Formel berechnet werden. Die Haversine-Formel berücksichtigt die Krümmung der Erde und gibt die kürzeste Entfernung zwischen zwei Punkten auf der Oberfläche einer Kugel an.

Der Winkel zwischen den Vektoren vom Erdmittelpunkt nach London und Frankfurt beträgt ca. 7,9°. Somit beträgt die direkte Verbindung zwischen den HAPs, die 17km über Frankfurt und London stehen sqrt(2 * 6387 (1 - cos(7,9°))) = 880km. Die Geometrie und der Abstand der zwei HAP-Plattformen 1800, 1802 über Frankfurt und London wird in Fig. 18 gezeigt.

Die Gesamtdistanz, die eine Nachricht zwischen beiden Börsenstandorten überbrücken müsste, wäre 17km + 880km + 17km = 914km. Ein Lichtsignal benötigt dazu ein Zeitintervall von 3,05ms Latenz. Dazu käme die Latenz der Kodierung/Dekodierung von < 10mus (siehe Torres-Figueroa et. al., "Implementation of Physical Layer Security into 5G NR Systems and E2E Latency Assessment", GobeCom 2022, Rio de Janeiro) und eine Durchleitungslatenz von <100mus bei direkter Durchleitung des Signals von Empfangs- zu Sendeantenne der beiden HAPs. Die Gesamtlatenz der Lösung wäre somit <3,2ms.

Vorteil:

- Die derzeit schnellste implementierte Kommunikationsstrecke zwischen den Börsen in Frankfurt und London beträgt 5ms Latenz (siehe https:/www.pressebox.de/pressemitteilung/gruppe-deutsche-boerse-ag/Deutsche-Boerse-Systems-startet-Ultra-Low-Latency-Verbindung-zwischen-London-und-Frankfurt/boxid/280309 ). Somit ergäbe eine HAP-Implementierung eine Beschleunigung von 36%.
- Zudem ist die dargestellte Verbindung semantisch sicher und insbesondere sicher gegenüber einem potenziellen Angriff von Quantencomputern.

Anmerkung: Die Nutzung einer terrestrischen Glasfaserverbindung wäre deutlich latenter, da die Lichtgeschwindigkeit in einer Glasfaser nur 200.000 km/s beträgt.

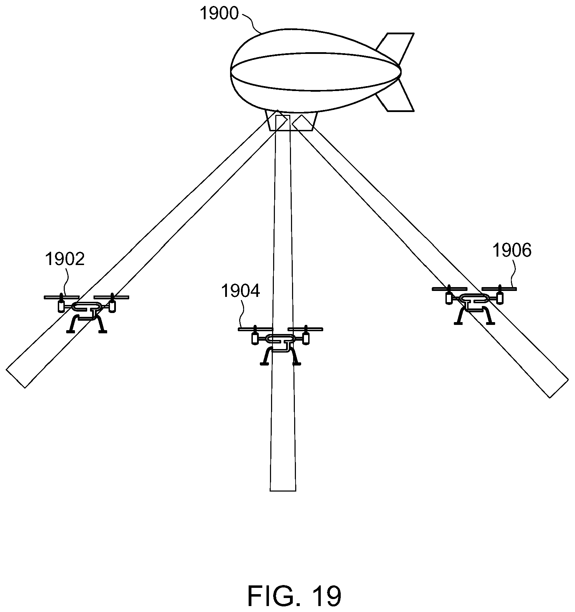

Ausführungsbeispiele können auch eine semantisch sichere Drohnensteuerung via HAPs ermöglichen. Fig. 19 zeigt ein Ausführungsbeispiel einer HAP 1900 die mehrere Antennenstrahlen nutzt, um mehreren Drohnen 1902, 1904 und 1906 zu steuern. Im Grundlagenteil der vorliegenden Beschreibung wurde gezeigt, dass die zentrale MIMO-Strahlungskeule einer Sendeantenne mit 1024 phasengekoppelten Teilantennen eine Abdeckung von 29m (FWHM) auf der Erdoberfläche (oder 100 Meter darüber) erzeugt.

Diese Abdeckung ist sehr gut zur Gewährleistung einer sicheren Steuerung und sicheren Navigation von fliegenden Drohnen geeignet, da schnell fliegende Objekte einen Sicherheitsabstand von typischerweise mehreren hundert Metern einhalten sollten, um die Kollisionswahrscheinlichkeiten zu minimieren. Das Szenario wird in Fig. 19 gezeigt. Die HAP 1900 nutzt MIMO-Keulen eines Antennenarrays um einzelne Drohnen 1902, 1904, 1906 zu steuern und zu navigieren. Die Keule überlappt und kommuniziert nur mit einer Drohne. Der PLS-Code stellt sicher, dass ausschließlich eine Drohne die Steuerkommandos dekodieren kann und diese Kommandos nicht abgehört bzw. manipuliert werden können. Um Fahrzeuge bzw. Autos individuell von einer HAP steuern zu können, müsste die Anzahl der kohärent wirkenden Sendeantennen deutlich erhöht werden. Um auf eine Abdeckung von maximal 5m FWHM zu kommen wäre ein Sendearray von ca. 8000 Antennen notwendig.

Ausführungsbeispiele schaffen ein Verfahren zur Absicherung verrauschter Satelliten-Kommunikationskanäle. Dabei sind folgende Aspekte beachtenswert:

- ◦ PLS ist informationstheoretisch sicher, sofern das SNR eines Angreifers schlechter ist als das eines rechtmäßigen Empfängers.
- ◦ Ergänzt die kryptographische Verschlüsselung der Nachrichten durch einen unabhängigen Sicherheitsvektor.
- ◦ Ende-zu-Ende (bei besonderer Kontrolle des Uplinks).
- ◦ Entropieverteilung über klassische Netzwerke möglich (geheim, verschlüsselt oder offen) zur Verteilung des Seeds. Der Seed darf, muss aber nicht öffentlich sein. Geheimer Seed ist besser als öffentlicher Seed.
- ◦ Resilientes Sicherheitsverfahren, was durch dynamische Anpassung des Seeds bzw. der Seed Längen beim Code ausgenutzt werden kann.
- ◦ Dieses Offenbarung zielt auf die Möglichkeit, die Kommunikation der zukünftigen 6G HAPs abzusichern.
- ◦ Quantensichere zweite Ebene in einer NTN Architektur mit deutlichen Vorteilen hinsichtlich Latenz gegenüber reinen Satelliten- und terrestrischen Verbindungen wird ermöglicht.
- ◦ Amplify-and-Forward bietet kostengünstige, technisch transparente und latenzoptimierte und energiesparende Lösung.
- ◦ Günstige Lösung hinsichtlich ihrer technischen Realisierung.
- ◦ Integrierbar in die Konzepte zu 6G / IR Laserkommunikation und die Quantensicherheit bei 5G/6G Netzwerken.

◦ Schützt lasergestützte HAP-Kommunikation vor Informationsverlusten durch Streuung, Beugung, oder atmosphärischen Einflüssen. Schützt den Down- und Uplink auch bei direkter Spionage des Laserstrahls.
◦ Pfaddiversifizierung über verschiedene Pfade einer HAP-Konstellation ermöglicht eine deutliche Erhöhung der Sicherheit von Sidelink Angriffen.
◦ Alternative zu quantenoptischen QKD-Satellitensysteme, die teuer, wenig resilient und sehr empfindlich sind.

Weitere Informationen finden sich in:

- https://www.japcc.org/articles/high-altitude-platform-systems/,
- GlobeCom 22 Studie, L. Torres-Figueroa, M. Hörmann, M. Wiese, U. J. Mönich, H. Boche, O. Holschke, and M. Geitz, "Implementation of physical layer security into 5G NR systems and E2E latency assessment," in Proceedings of the IEEE Global Telecommunications Conference, 2022 (GLOBECOM '22), 2022, pp. 4044-4050, doi: 10.1109/GLOBECOM48099.2022.10001457.
- M. Bloch, M. Hayashi and A. Thangaraj, "Error-control coding for physical-layer secrecy," Proc. IEEE, vol. 103, no. 10, pp. 1725-1746, 2015,
- https://www.ssk.de/SharedDocs/Beratungsergebnisse/DE/2021/2021-12-10_Stgn_5G_Mobilfunk.pdf?_blob=publicationFile&v=4 ,
- https://www.researchgate.net/figure/Beam-patterns-of-1024-element-large-scale-linear-an-tenna-array-LSLAA-ob tained-by_fig3 338084772 ,
- hf-praxis 11-2019, Zeitschrift HF-Praxis aus dem November 2019,
- https://www.researchgate.net/publication/252502511_Large-Array_Signal_Processing_for_Deep-Space_Applications/link/540f2f410cf2f2b29a3dd678/download ,
- https://www.everythingrf.com/rf-calculators/parabolic-reflector-antenna-gain .

Aspekte und Merkmale, die im Zusammenhang mit einem bestimmten der vorherigen Beispiele beschrieben sind, können auch mit einem oder mehreren der weiteren Beispiele kombiniert werden, um ein identisches oder ähnliches Merkmal dieses weiteren Beispiels zu ersetzen oder um das Merkmal in das weitere Beispiel zusätzlich einzuführen.

Beispiele können weiterhin ein (Computer-)Programm mit einem Programmcode zum Ausführen eines oder mehrerer der obigen Verfahren sein oder sich darauf beziehen, wenn das Programm auf einem Computer, einem Prozessor oder einer sonstigen programmierbaren Hardwarekomponente ausgeführt wird. Schritte, Operationen oder Prozesse von verschiedenen der oben beschriebenen Verfahren können also auch durch programmierte Computer, Prozessoren oder sonstige programmierbare Hardwarekomponenten ausgeführt werden. Beispiele können auch Programmspeichervorrichtungen, z.B. Digitaldatenspeichermedien, abdecken, die maschinen-, prozessor- oder computerlesbar sind und maschinenausführbare, prozessorausführbare oder computerausführbare Programme und Anweisungen codieren beziehungsweise enthalten. Die Programmspeichervorrichtungen können z.B. Digitalspeicher, magnetische Speichermedien wie beispielsweise Magnetplatten und Magnetbänder, Festplattenlaufwerke oder optisch lesbare Digitaldatenspeichermedien umfassen oder sein. Weitere Beispiele können auch Computer, Prozessoren, Steuereinheiten, feld-programmierbare Logik-Arrays ((F)PLAs = (Field) Programmable Logic Arrays), feld-programmierbare Gate-Arrays ((F)PGA = (Field) Programmable Gate Arrays), Grafikprozessoren (GPU = Graphics Processor Unit), anwendungsspezifische integrierte Schaltungen (ASIC = application-specific integrated circuit), integrierte Schaltungen (IC= Integrated Circuit) oder Ein-Chip-Systeme (SoC = System-on-a-Chip) abdecken, die zum Ausführen der Schritte der oben beschriebenen Verfahren programmiert sind.

Es versteht sich ferner, dass die Offenbarung mehrerer, in der Beschreibung oder den Ansprüchen offenbarter Schritte, Prozesse, Operationen oder Funktionen nicht als zwingend in der beschriebenen Reihenfolge befindlich ausgelegt werden soll, sofern dies nicht im Einzelfall explizit angegeben oder aus technischen Gründen zwingend erforderlich ist. Daher wird durch die vorhergehende Beschreibung die Durchführung von mehreren Schritten oder Funktionen nicht auf eine bestimmte Reihenfolge begrenzt. Ferner kann bei weiteren Beispielen ein einzelner Schritt, eine einzelne Funktion, ein einzelner Prozess oder eine einzelne Operation mehrere Teilschritte, -funktionen, -prozesse oder -operationen einschließen und/oder in dieselben aufgebrochen werden.

Wenn einige Aspekte in den vorhergehenden Abschnitten im Zusammenhang mit einer Vorrichtung oder einem System beschrieben wurden, sind diese Aspekte auch als eine Beschreibung des entsprechenden Verfahrens zu verstehen. Dabei kann beispielsweise ein Block, eine Vorrichtung oder ein funktionaler Aspekt der Vorrichtung oder des Systems einem Merkmal, etwa einem Verfahrensschritt, des entsprechenden Verfahrens entsprechen. Entsprechend dazu sind Aspekte, die im Zusammenhang mit einem Verfahren beschrieben werden, auch als eine Beschreibung eines entsprechenden Blocks, eines entsprechenden Elements, einer Eigenschaft oder eines funktionalen Merkmals einer entsprechenden Vorrichtung oder eines entsprechenden Systems zu verstehen.

## Patentansprüche

1. Eine Vorrichtung (10) für einen Sendeempfänger einer Höhenplattform (100), High-Altitude Platform HAP, und zur Sicherung von Kommunikationsverbindungen zwischen dem Sendeempfänger und weiteren Sendeempfängern in einem Kommunikationssystem (400), mit

   einer Laserkommunikationseinrichtung (12) zur Kommunikation über eine Laserverbindung mit einem ersten weiteren Sendeempfänger (200);
   einem Laser-Sicherheitsmodul (14), das ausgebildet ist, um die Laserverbindung durch Verwenden von zusätzlich eingefügten ersten Rauschanteilen auf einer physikalischen Schicht der Laserverbindung zu sichern;
   eine Funkkommunikationseinrichtung (16) zur Kommunikation über eine Funkverbindung mit einem zweiten weiteren Sendeempfänger (300); und
   einem Funk-Sicherheitsmodul (18), das ausgebildet ist, um die Funkverbindung durch Verwenden von zusätzlich eingefügten zweiten Rauschanteilen auf einer physikalischen Schicht der Funkverbindung zu sichern.

2. Die Vorrichtung (10) gemäß Anspruch 1, wobei die Laserkommunikationseinrichtung (12) eine Sendeapertur zur Abstrahlung eines Lasersignals aufweist, wobei die Sendeapertur mindestens dem 10^5-fachen der Wellenlänge des abgestrahlten Laserlichtes entspricht und/oder wobei die Laserkommunikationseinrichtung eine Empfangsapertur zum Empfang eines Lasersignals aufweist, wobei die Empfangsapertur mindestens dem 10^5-fachen der Wellenlänge des empfangenen Laserlichtes entspricht.

3. Die Vorrichtung (10) gemäß einem der Ansprüche 1 oder 2, wobei die Laserkommunikationseinrichtung (12) ausgebildet ist, um Information über eine Übertragungsqualität mit dem ersten weiteren Sendeempfänger (200) zu kommunizieren und ferner ausgebildet ist, um Übertragungsparameter und/oder eine Vorschrift für das Einfügen der Rauschanteile für die Laserverbindung einzustellen,

   basierend auf der Übertragungsqualität und basierend auf einem zur Absicherung der Laserverbindung notwendigen Signalqualitätsunterschied für einen Abhörer relativ zu einer Signalqualität beim legitimen Empfänger, und/oder
   basierend auf der Übertragungsqualität und basierend auf einem geschätzten Signalqualitätsunterschied für einen Abhörer relativ zu einer Signalqualität beim legitimen Empfänger, um die Nachricht vor einem Abhören zu sichern.

4. Die Vorrichtung (10) gemäß einem der Ansprüche 1 bis 3, wobei die Funkkommunikationseinrichtung (16) ausgebildet ist, um einen Antennenstrahl mit einer oder mehreren Antennen zu formen, dessen Halbwertsbreite kleiner als 1% eines Abstands zu den ein oder mehreren Antennen ist, , wobei der Antennenstrahl auf dem Boden eine Halbwertsbreite von weniger als 50m aufweist und/oder wobei die Funkkommunikationseinrichtung ferner ein Antennenfeld mit mehr als 1000 Antennenelementen aufweist.

5. Die Vorrichtung (10) gemäß einem der Ansprüche 1 bis 4, wobei die Funkkommunikationseinrichtung (16) ausgebildet ist, um Information über eine Übertragungsqualität mit dem zweiten weiteren Sendeempfänger (300) zu kommunizieren und ferner ausgebildet ist, um Übertragungsparameter und/oder eine Vorschrift für das Einfügen der Rauschanteile für die Funkverbindung einzustellen,

   basierend auf der Übertragungsqualität und basierend auf einem zur Absicherung der Funkverbindung notwendigen Signalqualitätsunterschied für einen Abhörer relativ zu einer Signalqualität beim legitimen Empfänger, und/oder
   basierend auf der Übertragungsqualität und basierend auf einem geschätzten Signalqualitätsunterschied für einen Abhörer relativ zu einer Signalqualität beim legitimen Empfänger, um die Nachricht vor einem Abhören zu sichern.

6. Die Vorrichtung (10) gemäß einem der vorangehenden Ansprüche, wobei die zusätzlich eingefügten ersten und/oder zweiten Rauschanteile auf einem oder mehreren Zufallswerten basieren, die der HAP (100) und dem ersten und/oder dem zweiten weiteren Sendempfänger (200; 300) bekannt sind und /oder wobei der erste weitere Sendeempfänger (200) ein Satellit, eine andere HAP oder eine stationäre Bodenstation ist und/oder wobei der zweite weitere Sendeempfänger (300) ein Mobilfunkendgerät oder ein gesteuertes Vehikel ist.

7. Die Vorrichtung (10) gemäß einem der vorangehenden Ansprüche, ferner umfassend ein oder mehrere Signalver-

arbeitungskomponenten, die ausgebildet sind, um eine über die Funkkommunikationseinrichtung (16) empfangene Nachricht von dem zweiten weiteren Sendeempfänger (300) über die Laserkommunikationseinrichtung (12) an den ersten weiteren Sendeempfänger (200) weiterzuleiten, und/oder um eine über die Laserkommunikationseinrichtung (12) empfangene Nachricht von dem ersten weiteren Sendeempfänger (200) über die Funkkommunikationseinrichtung (16) an den zweiten weiteren Sendeempfänger (300) weiterzuleiten.

**8.** Die Vorrichtung (10) gemäß Anspruch 7, wobei die ein oder mehreren Signalverarbeitungskomponenten ausgebildet sind, um in der Nachricht über das Laser-Sicherheitsmodul (14) und das Funk-Sicherheitsmodul (18) vor dem Weiterleiten vorherige zusätzliche Rauschanteile zu entfernen und neue zusätzliche Rauschanteile einzufügen und/oder wobei die ein oder mehreren Signalverarbeitungskomponenten ausgebildet sind, um die Nachricht weiterzuleiten, ohne die zusätzlichen Rauschanteile in der Nachricht zu verändern.

**9.** Die Vorrichtung (10) gemäß einem der Ansprüche 7 oder 8, wobei die ein oder mehreren Signalverarbeitungskomponenten ausgebildet sind, um weitere Zufallszahlen zu generieren und um auf Basis der weiteren Zufallszahlen kryptografische Schlüssel zu bestimmen, wobei die ein oder mehreren Signalverarbeitungskomponenten ferner ausgebildet sind, um die kryptographischen Schlüssel über das Laser-Sicherheitsmodul (14) und/oder das Funk-Sicherheitsmodul (18) für die Übertragung auf der physikalischen Schicht zu sichern und an ein oder mehrere weitere Sendeempfänger zu übertragen, und/oder wobei das Laser-Sicherheitsmodul (14) und/oder das Funk-Sicherheitsmodul (18) ferner ausgebildet sind, um die Kommunikation zusätzlich über einen post-quantum-kryptografischen Verschlüsselungsalgorithmus zu verschlüsseln.

**10.** Eine Vorrichtung (20) für einen Sendeempfänger einer Bodenstation (200) und zur Sicherung einer Kommunikationsverbindung zwischen dem Sendeempfänger und einer Höhenplattform (100), HAP, in einem Kommunikationssystem (400), mit

einer Laserkommunikationseinrichtung (22) zur Kommunikation über eine Laserverbindung mit der HAP (100); und
einem Laser-Sicherheitsmodul (24), das ausgebildet ist, um die Laserverbindung durch Verwenden von zusätzlich eingefügten Rauschanteilen auf einer physikalischen Schicht der Laserverbindung, zu sichern;
wobei die Laserkommunikationseinrichtung (22) eine Sendeapertur zur Abstrahlung eines Lasersignals aufweist, wobei die Sendeapertur mindestens dem 5*10^5-fachen der Wellenlänge des abgestrahlten Laserlichtes entspricht.

**11.** Die Vorrichtung (20) gemäß Anspruch 10, wobei die Laserkommunikationseinrichtung (22) ferner eine Empfangsapertur zum Empfang eines Lasersignals aufweist, wobei die Empfangsapertur mindestens dem 5*10^5-fachen der Wellenlänge des abgestrahlten Laserlichtes entspricht und/oder wobei die Empfangsapertur mindestens einer Halbwertsbreite eines Laserstrahls der Höhenplattform auf dem Boden entspricht.

**12.** Ein Verfahren (50) für einen Sendeempfänger einer Höhenplattform (100), HAP, und zur Sicherung von Kommunikationsverbindungen zwischen dem Sendeempfänger und weiteren Sendeempfängern in einem Kommunikationssystem (400), mit

Kommunizieren (52) über eine Laserverbindung mit einem ersten weiteren Sendeempfänger (200);
Sichern (54) der Laserverbindung durch Verwenden von zusätzlich eingefügten ersten Rauschanteilen auf einer physikalischen Schicht der Laserverbindung;
Kommunizieren (56) über eine Funkverbindung mit einem zweiten weiteren Sendeempfänger (300); und
Sichern (58) der Funkverbindung durch Verwenden von zusätzlich eingefügten zweiten Rauschanteilen auf einer physikalischen Schicht der Funkverbindung.

**13.** Ein Verfahren (60) für einen Sendeempfänger einer Bodenstation (200) und zur Sicherung einer Kommunikationsverbindung zwischen dem Sendeempfänger und einer Höhenplattform (100), HAP, in einem Kommunikationssystem (400), mit

Kommunizieren (62) über eine Laserverbindung mit der HAP;
Sichern (64) der Laserverbindung durch Verwenden von künstlich eingefügten Rauschanteilen auf einer physikalischen Schicht der Laserverbindung;
Abstrahlen (66) eines Lasersignals zu Kommunikation mit der HAP über eine Sendeapertur, wobei die Sendeapertur mindestens dem 5* 10^5-fachen der Wellenlänge des abgestrahlten Laserlichtes entspricht.

**14.** Ein Computerprogramm mit einem Programmcode zur Durchführung eines der Verfahren (50; 60) gemäß einem der Ansprüche 12 oder 13, wenn der Programmcode auf einem Computer, einem Prozessor oder einer programmierbaren Hardwarekomponente ausgeführt wird.

**15.** Ein System zur Realisierung einer quantensicheren Niedriglatenzverbindung zwischen zwei Bodenstationen (200) mit Vorrichtungen (20) gemäß einem der Ansprüche 10 oder 11 und mit einer oder mehreren Höhenplattformen (100) mit einer Vorrichtung (10) gemäß einem der Ansprüche 1 bis 9 als Relaisstrecke zwischen den zwei Bodenstationen (200).

**Claims**

**1.** An apparatus (10) for a transceiver of a high-altitude platform (100), HAP, and for securing communication links between the transceiver and further transceivers in a communication system (400), comprising

a laser communication device (12) for communicating via a laser link with a first further transceiver (200);
a laser security module (14) which is configured to secure the laser link by using additionally inserted first noise components on a physical layer of the laser link;
a radio communication device (16) for communicating via a radio link with a second further transceiver (300); and
a radio security module (18) which is configured to secure the radio link by using additionally inserted second noise components on a physical layer of the radio link.

**2.** The apparatus (10) according to claim 1, wherein the laser communication device (12) has a transmission aperture for emitting a laser signal, wherein the transmission aperture corresponds to at least 10^5 times the wavelength of the emitted laser light and/or wherein the laser communication device has a reception aperture for receiving a laser signal, wherein the reception aperture corresponds to at least 10^5 times the wavelength of the received laser light.

**3.** The apparatus (10) according to any one of claims 1 or 2, wherein the laser communication device (12) is configured to communicate information about a transmission quality with the first further transceiver (200) and is further configured to set transmission parameters and/or a rule for inserting the noise components for the laser link,

based on the transmission quality and based on a signal quality difference necessary for securing the laser link for an eavesdropper relative to a signal quality at the legitimate receiver, and/or
based on the transmission quality and based on an estimated signal quality difference for an eavesdropper relative to a signal quality at the legitimate receiver, in order to secure the message from eavesdropping.

**4.** The apparatus (10) according to any one of claims 1 to 3, wherein the radio communication device (16) is configured to form an antenna beam with one or more antennas, the full width at half maximum of which is less than 1% of a distance to the one or more antennas, wherein the antenna beam on the ground has a full width at half maximum of less than 50 m and/or wherein the radio communication device further comprises an antenna array with more than 1000 antenna elements.

**5.** The apparatus (10) according to any one of claims 1 to 4, wherein the radio communication device (16) is configured to communicate information about a transmission quality with the second further transceiver (300) and is further configured to set transmission parameters and/or a rule for inserting the noise components for the radio link,

based on the transmission quality and based on a signal quality difference necessary for securing the radio link for an eavesdropper relative to a signal quality at the legitimate receiver, and/or
based on the transmission quality and based on an estimated signal quality difference for an eavesdropper relative to a signal quality at the legitimate receiver, in order to secure the message from eavesdropping.

**6.** The apparatus (10) according to any one of the preceding claims, wherein the additionally inserted first and/or second noise components are based on one or more random values which are known to the HAP (100) and the first and/or the second further transceiver (200; 300) and/or wherein the first further transceiver (200) is a satellite, another HAP or a stationary ground station and/or wherein the second further transceiver (300) is a mobile radio terminal or a controlled vehicle.

**7.** The apparatus (10) according to any one of the preceding claims, further comprising one or more signal processing

components which are configured to forward a message received via the radio communication device (16) from the second further transceiver (300) via the laser communication device (12) to the first further transceiver (200), and/or to forward a message received via the laser communication device (12) from the first further transceiver (200) via the radio communication device (16) to the second further transceiver (300).

**8.** The apparatus (10) according to claim 7, wherein the one or more signal processing components are configured to remove previous additional noise components in the message via the laser security module (14) and the radio security module (18) before forwarding and to insert new additional noise components and/or wherein the one or more signal processing components are configured to forward the message without changing the additional noise components in the message.

**9.** The apparatus (10) according to any one of claims 7 or 8, wherein the one or more signal processing components are configured to generate further random numbers and to determine cryptographic keys on the basis of the further random numbers, wherein the one or more signal processing components are further configured to secure the cryptographic keys via the laser security module (14) and/or the radio security module (18) for the transmission on the physical layer and to transmit them to one or more further transceivers, and/or wherein the laser security module (14) and/or the radio security module (18) are further configured to additionally encrypt the communication via a post-quantum cryptographic encryption algorithm.

**10.** An apparatus (20) for a transceiver of a ground station (200) and for securing a communication link between the transceiver and a high-altitude platform (100), HAP, in a communication system (400), comprising

a laser communication device (22) for communicating via a laser link with the HAP (100); and a laser security module (24) which is configured to secure the laser link by using additionally inserted noise components on a physical layer of the laser link;
wherein the laser communication device (22) has a transmission aperture for emitting a laser signal, wherein the transmission aperture corresponds to at least 5*10^5 times the wavelength of the emitted laser light.

**11.** The apparatus (20) according to claim 10, wherein the laser communication device (22) further comprises a reception aperture for receiving a laser signal, wherein the reception aperture corresponds to at least 5*10^5 times the wavelength of the emitted laser light and/or wherein the reception aperture corresponds to at least one full width at half maximum of a laser beam of the high-altitude platform on the ground.

**12.** A method (50) for a transceiver of a high-altitude platform (100), HAP, and for securing communication links between the transceiver and further transceivers in a communication system (400), comprising

communicating (52) via a laser link with a first further transceiver (200);
securing (54) the laser link by using additionally inserted first noise components on a physical layer of the laser link;
communicating (56) via a radio link with a second further transceiver (300); and
securing (58) the radio link by using additionally inserted second noise components on a physical layer of the radio link.

**13.** A method (60) for a transceiver of a ground station (200) and for securing a communication link between the transceiver and a high-altitude platform (100), HAP, in a communication system (400), comprising

communicating (62) via a laser link with the HAP;
securing (64) the laser link by using artificially inserted noise components on a physical layer of the laser link;
emitting (66) a laser signal for communicating with the HAP via a transmission aperture, wherein the transmission aperture corresponds to at least 5*10^5 times the wavelength of the emitted laser light.

**14.** A computer program comprising a program code for carrying out one of the methods (50; 60) according to any one of claims 12 or 13, when the program code is executed on a computer, a processor or a programmable hardware component.

**15.** A system for implementing a quantum-secure low-latency link between two ground stations (200) comprising apparatuses (20) according to any one of claims 10 or 11 and comprising one or more high-altitude platforms (100) comprising an apparatus (10) according to any one of claims 1 to 9 as a relay link between the two ground

stations (200).

## Revendications

1. Dispositif (10) pour un émetteur-récepteur d'une plateforme à haute altitude (100), HAP, et pour sécuriser des liaisons de communication entre l'émetteur-récepteur et d'autres émetteurs-récepteurs dans un système de communication (400), comprenant

   un dispositif de communication laser (12) pour communiquer par l'intermédiaire d'une liaison laser avec un premier autre émetteur-récepteur (200) ;
   un module de sécurité laser (14) qui est configuré pour sécuriser la liaison laser en utilisant des premières composantes de bruit insérées en plus sur une couche physique de la liaison laser ; un dispositif de communication radio (16) pour communiquer par l'intermédiaire d'une liaison radio avec un deuxième autre émetteur-récepteur (300) ; et
   un module de sécurité radio (18) qui est configuré pour sécuriser la liaison radio en utilisant des deuxièmes composantes de bruit insérées en plus sur une couche physique de la liaison radio.

2. Dispositif (10) selon la revendication 1, dans lequel le dispositif de communication laser (12) présente une ouverture d'émission pour émettre un signal laser, dans lequel l'ouverture d'émission correspond au moins à 10^5 fois la longueur d'onde de la lumière laser émise et/ou dans lequel le dispositif de communication laser présente une ouverture de réception pour recevoir un signal laser, dans lequel l'ouverture de réception correspond au moins à 10^5 fois la longueur d'onde de la lumière laser reçue.

3. Dispositif (10) selon l'une des revendications 1 ou 2, dans lequel le dispositif de communication laser (12) est configuré pour communiquer des informations sur une qualité de transmission avec le premier autre émetteur-récepteur (200) et est en outre configuré pour régler des paramètres de transmission et/ou une règle pour l'insertion des composantes de bruit pour la liaison laser,

   sur la base de la qualité de transmission et sur la base d'une différence de qualité de signal nécessaire pour sécuriser la liaison laser pour un intercepteur par rapport à une qualité de signal au niveau du récepteur légitime, et/ou
   sur la base de la qualité de transmission et sur la base d'une différence de qualité de signal estimée pour un intercepteur par rapport à une qualité de signal au niveau du récepteur légitime, pour sécuriser le message avant une interception.

4. Dispositif (10) selon l'une des revendications 1 à 3, dans lequel le dispositif de communication radio (16) est configuré pour former un faisceau d'antenne avec une ou plusieurs antennes, dont la largeur à mi-hauteur est inférieure à 1 % d'une distance par rapport au ou aux antennes, dans lequel le faisceau d'antenne présente au sol une largeur à mi-hauteur inférieure à 50 m et/ou dans lequel le dispositif de communication radio présente en outre un réseau d'antennes avec plus de 1000 éléments d'antenne.

5. Dispositif (10) selon l'une des revendications 1 à 4, dans lequel le dispositif de communication radio (16) est configuré pour communiquer des informations sur une qualité de transmission avec le deuxième autre émetteur-récepteur (300) et est en outre configuré pour régler des paramètres de transmission et/ou une règle pour l'insertion des composantes de bruit pour la liaison radio,

   sur la base de la qualité de transmission et sur la base d'une différence de qualité de signal nécessaire pour sécuriser la liaison radio pour un intercepteur par rapport à une qualité de signal au niveau du récepteur légitime, et/ou
   sur la base de la qualité de transmission et sur la base d'une différence de qualité de signal estimée pour un intercepteur par rapport à une qualité de signal au niveau du récepteur légitime, pour sécuriser le message avant une interception.

6. Dispositif (10) selon l'une des revendications précédentes, dans lequel les premières et/ou deuxièmes composantes de bruit insérées en plus sont basées sur une ou plusieurs valeurs aléatoires qui sont connues de la HAP (100) et du premier et/ou du deuxième autre émetteur-récepteur (200 ; 300) et/ou dans lequel le premier autre émetteur-récepteur (200) est un satellite, une autre HAP ou une station au sol stationnaire et/ou dans lequel le deuxième autre

émetteur-récepteur (300) est un terminal radio mobile ou un véhicule commandé.

7. Dispositif (10) selon l'une des revendications précédentes, comprenant en outre un ou plusieurs composants de traitement de signal qui sont configurés pour acheminer un message reçu par l'intermédiaire du dispositif de communication radio (16) du deuxième autre émetteur-récepteur (300) par l'intermédiaire du dispositif de communication laser (12) au premier autre émetteur-récepteur (200), et/ou pour acheminer un message reçu par l'intermédiaire du dispositif de communication laser (12) du premier autre émetteur-récepteur (200) par l'intermédiaire du dispositif de communication radio (16) au deuxième autre émetteur-récepteur (300).

8. Dispositif (10) selon la revendication 7, dans lequel le ou les composants de traitement de signal sont configurés pour supprimer des composantes de bruit supplémentaires précédentes dans le message par l'intermédiaire du module de sécurité laser (14) et du module de sécurité radio (18) avant l'acheminement et pour insérer de nouvelles composantes de bruit supplémentaires et/ou dans lequel le ou les composants de traitement de signal sont configurés pour acheminer le message sans modifier les composantes de bruit supplémentaires dans le message.

9. Dispositif (10) selon l'une des revendications 7 ou 8, dans lequel le ou les composants de traitement de signal sont configurés pour générer d'autres nombres aléatoires et pour déterminer des clés cryptographiques sur la base des autres nombres aléatoires, dans lequel le ou les composants de traitement de signal sont en outre configurés pour sécuriser les clés cryptographiques par l'intermédiaire du module de sécurité laser (14) et/ou du module de sécurité radio (18) pour la transmission sur la couche physique et pour les transmettre à un ou plusieurs autres émetteurs-récepteurs, et/ou dans lequel le module de sécurité laser (14) et/ou le module de sécurité radio (18) sont en outre configurés pour chiffrer la communication en plus par l'intermédiaire d'un algorithme de chiffrement cryptographique post-quantique.

10. Dispositif (20) pour un émetteur-récepteur d'une station au sol (200) et pour sécuriser une liaison de communication entre l'émetteur-récepteur et une plateforme à haute altitude (100), HAP, dans un système de communication (400), comprenant

un dispositif de communication laser (22) pour communiquer par l'intermédiaire d'une liaison laser avec la HAP (100) ; et
un module de sécurité laser (24) qui est configuré pour sécuriser la liaison laser en utilisant des composantes de bruit insérées en plus sur une couche physique de la liaison laser ;
dans lequel le dispositif de communication laser (22) présente une ouverture d'émission pour émettre un signal laser, dans lequel l'ouverture d'émission correspond au moins à 5*10^5 fois la longueur d'onde de la lumière laser émise.

11. Dispositif (20) selon la revendication 10, dans lequel le dispositif de communication laser (22) présente en outre une ouverture de réception pour recevoir un signal laser, dans lequel l'ouverture de réception correspond au moins à 5*10^5 fois la longueur d'onde de la lumière laser émise et/ou dans lequel l'ouverture de réception correspond au moins à une largeur à mi-hauteur d'un faisceau laser de la plateforme à haute altitude au sol.

12. Procédé (50) pour un émetteur-récepteur d'une plateforme à haute altitude (100), HAP, et pour sécuriser des liaisons de communication entre l'émetteur-récepteur et d'autres émetteurs-récepteurs dans un système de communication (400), comprenant le fait de

communiquer (52) par l'intermédiaire d'une liaison laser avec un premier autre émetteur-récepteur (200) ;
sécuriser (54) la liaison laser en utilisant des premières composantes de bruit insérées en plus sur une couche physique de la liaison laser ;
communiquer (56) par l'intermédiaire d'une liaison radio avec un deuxième autre émetteur-récepteur (300) ; et
sécuriser (58) la liaison radio en utilisant des deuxièmes composantes de bruit insérées en plus sur une couche physique de la liaison radio.

13. Procédé (60) pour un émetteur-récepteur d'une station au sol (200) et pour sécuriser une liaison de communication entre l'émetteur-récepteur et une plateforme à haute altitude (100), HAP, dans un système de communication (400), comprenant le fait de

communiquer (62) par l'intermédiaire d'une liaison laser avec la HAP ;
sécuriser (64) la liaison laser en utilisant des composantes de bruit insérées artificiellement sur une couche

physique de la liaison laser ;
émettre (66) un signal laser pour communiquer avec la HAP par l'intermédiaire d'une ouverture d'émission, dans lequel l'ouverture d'émission correspond au moins à 5*10^5 fois la longueur d'onde de la lumière laser émise.

**14.** Programme informatique comprenant un code de programme pour mettre en œuvre l'un des procédés (50 ; 60) selon l'une des revendications 12 ou 13, lorsque le code de programme est exécuté sur un ordinateur, un processeur ou un composant matériel programmable.

**15.** Système pour réaliser une liaison à faible latence à sécurité quantique entre deux stations au sol (200) comprenant des dispositifs (20) selon l'une des revendications 10 ou 11 et comprenant une ou plusieurs plateformes à haute altitude (100) comprenant un dispositif (10) selon l'une des revendications 1 à 9 en tant que liaison relais entre les deux stations au sol (200).

Laserkommunikations-
einrichtung
Laser-
Sicherheitsmodul
14
12
Funkkommunikations-
einrichtung
Funk-
Sicherheitsmodul
18
16
10
100
Laserverbindung
Funkverbindung
Laserkommunikations-
einrichtung
Laser-
Sicherheitsmodul
24
22
20
200
Funk-
Sicherheits
modul
300
400

FIG. 1

Kommunizieren über eine Laserverbindung mit einem ersten weiteren Sendeempfänger
52
Kommunizieren über eine Funkverbindung mit einem zweiten weiteren Sendeempfänger
56
Sichern der Laserverbindung durch Verwenden von zusätzlich eingefügten ersten Rauschanteilen auf einer physikalischen Schicht der Laserverbindung
54
Sichern der Funkverbindung durch Verwenden von zusätzlich eingefügten zweiten Rauschanteilen auf einer physikalischen Schicht der Funkverbindung
58
50

FIG. 2

Kommunizieren über eine Laserverbindung mit der HAP
62
Sichern der Laserverbindung durch Verwenden von künstlich eingefügten Rauschanteilen auf einer physikalischen Schicht der Laserverbindung
64
Abstrahlen eines Lasersignals zur Kommunikation mit der HAP über eine Sendeapertur, wobei die Sendeapertur mindestens dem 5*10^5-fachen der Wellenlänge des abgestrahlten Laserlichtes entspricht
66

60

FIG. 3

km
36000
500
20
12
0
100a
100b
100c
100d
200a
200b
200c

FIG. 4

Nachricht
PLS
Coder
502
Tx
504
Rx
506
PLS
Decoder
508
Nachricht
Eve
Rx
510
Rauschen

FIG. 5

exp(-r²/W²)
r
W_O
√2W_O
Z_R
0
R (Z)
W (Z)
Z
Ausdehnung
Wellenfront
Intensitätsprofil
Krümmung


FIG. 6

herkömmliche Antenne ohne Beamforming

Beamforming mit einem Beam

Ansicht von der Seite

Ansicht von der Seite

Ansicht von oben

Ansicht von oben

FIG. 7

...
θ
d
Δd=dSinθ
Δd=2dSinθ
d

FIG. 8

Pattern (dBi)
30
20
10
0
-10
-20
-30
-40
-50
theta (deg)
-80
-60
-40
-20
0
20
40
60
80

FIG. 9

Höhe
(km)
100
50
10
-100
-50
0
Temperatur (°C)
Thermosphäre
Mesosphäre
Stratosphäre
Troposphäre
Mesopause
Stratopause
Tropopause
Temperaturschichtung
der
Atmosphäre

FIG. 10

700
Spy link
2230km
400km
100b
Downlink
15km
City 2
Sidelink
100a
15km
Uplink
City 1

FIG. 11

1.0
0.8
0.5
0.4
0.2
0.0
1.0
0.8
0.5
0.4
0.2
0.0
30
20
10
0
-10
-20
-30
y
30
20
10
0
-10
-20
-30
x

FIG. 12

1.0
0.8
0.6
0.4
0.2
0.0
-40
-20
0
20
40
FWHM=15m
Legitimer Empfänger

FIG. 13

SNR Quotient
1.4
1.2
1.0
0.8
0.6
3000
3250
3500
3750
4000
4250
4500
4750
5000

FIG. 14

1500
IRL
A
1502
1502
A
IRL
IRL
A
A
IRL
IRL
A
Compute, Network, Storage,
(De-)Coding, (Q)RING
6G Coree, AI Logic, Big Data,
Applications
A
A
R
F
R
F
R
F
IRL
IRL

FIG. 15

1600
RL
A
RL
A
R
F
T
IRL
R
F
A
RL
A
RL

FIG. 16

1704
Faser Link
IR Laser Link
RF Coverage
1702
1708
1700
1706

FIG. 17

1802
17km
LON
880km
876km
FRA
17km
1800

FIG. 18

1900
1902
1904
1906

FIG. 19

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 22209986 A
- EP 23196965 A
- EP 24174614 A


### In der Beschreibung aufgeführte Nicht-Patentliteratur


- **ARSLAN HÜSEYIN et al.** Physical Layer Security for Wireless Sensing and Communication. *IET Security Series*, 01 January 2022, 1-359
- **M. BLOCH** ; **M. HAYASHI** ; **A. THANGARAJ**. Error-control coding for physical-layer secrecy. *Proc. IEEE*, 2015, vol. 103 (10), 1725-1746
- **L. TORRES-FIGUEROA** ; **M. HÖRMANN** ; **M. WIESE** ; **U. J. MÖNICH** ; **H. BOCHE** ; **O. HOLSCHKE** ; **M. GEITZ**. Implementation of physical layer security into 5G NR systems and E2E latency assessment. *Proceedings of the IEEE Global Telecommunications Conference, 2022 (GLOBECOM '22)*, 2022, 4044-4050